Europäisches Patentamt

European Patent Office

Office européen des brevets

(19)

(11) **EP 1 229 696 B1**

(12) **FASCICULE DE BREVET EUROPEEN**

(45) Date de publication et mention
de la délivrance du brevet:
**19.04.2006 Bulletin 2006/16**

(51) Int Cl.:
**H04L 25/02** (2006.01)

(21) Numéro de dépôt: **02290235.7**

(22) Date de dépôt: **01.02.2002**

(54) **Estimation des paramètres de canal au moyen d'estimation de maximum de vraisemblance**

Schätzung der Kanalparameter mittels Maximalwahrscheinlichkeitsschätzung

Channel parameters estimation using maximum likelihood estimation

(84) Etats contractants désignés:
**AT BE CH CY DE DK ES FI FR GB GR IE IT LI LU MC NL PT SE TR**

(30) Priorité: **02.02.2001 FR 0101429**

(43) Date de publication de la demande:
**07.08.2002 Bulletin 2002/32**

(73) Titulaire: **Thales**
**75008 Paris (FR)**

(72) Inventeurs:
• **Chevalier, Pascal,**
**Thales,**
**Intellectual Property**
**94117 Arcueil Cedex (FR)**
• **Chenu-Tournier, Marc,**
**Thales,**
**Intellectual**
**94117 Arcueil Cedex (FR)**
• **Adnet, Claude,**
**Thales,**
**Intellectual Property**
**94117 Arcueil Cedex (FR)**
• **Larzabal, Pascal,**
**Thales,**
**Intellectual Property**
**94117 Arcueil Cedex (FR)**

(74) Mandataire: **Dudouit, Isabelle**
**Marks & Clerk France**
**31-33 Avenue Aristide Briand**
**94117 Arcueil Cedex (FR)**

(56) Documents cités:

• MADYASTHA R ET AL: "DELAY AND DOA ESTIMATION IN CDMA COMMUNICATION SYSTEMS VIA MAXIMUM LIKELIHOOD TECHNIQUES" PROCEEDINGS OF THE 1997 IEEE INTERNATIONAL SYMPOSIUM ON INFORMATION THEORY. ISIT '97. ULM, JUNE 29 - JULY 4, 1997, IEEE INTERNATIONAL SYMPOSIUM ON INFORMATION THEORY, NEW YORK, NY: IEEE, US, 29 juin 1997 (1997-06-29), page 350 XP000950940 ISBN: 0-7803-3957-6
• WAX M ET AL: "Joint estimation of time delays and directions of arrival of multiple reflections of a known signal" IEEE TRANSACTIONS ON SIGNAL PROCESSING, OCT. 1997, IEEE, USA, vol. 45, no. 10, pages 2477-2484, XP002177398 ISSN: 1053-587X
• WAX M ET AL: "Joint estimation of time delays and directions of arrival of multiple reflections of a known signal" 1996 IEEE INTERNATIONAL CONFERENCE ON ACOUSTICS, SPEECH, AND SIGNAL PROCESSING CONFERENCE PROCEEDINGS (CAT. NO.96CH35903), 1996 IEEE INTERNATIONAL CONFERENCE ON ACOUSTICS, SPEECH, AND SIGNAL PROCESSING CONFERENCE PROCEEDINGS, ATLANTA, GA, USA, 7-10 M, pages 2622-2625 vol. 5, XP002177399 1996, New York, NY, USA, IEEE, USA ISBN: 0-7803-3192-3
• YLITALO J: "PERFORMANCE OF A DIGITAL BEAMFORMING CONCEPT IN A GSM1800 DOWNLINK: A SIMULATION STUDY" WIRELESS PERSONAL COMMUNICATIONS, KLUWER ACADEMIC PUBLISHERS, NL, vol. 11, no. 1, octobre 1999 (1999-10), pages 31-42, XP000835060 ISSN: 0929-6212

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

EP 1 229 696 B1

- LASENBY J ET AL: "A BAYESIAN APPROACH TO HIGH-RESOLUTION BEAMFORMING" IEE PROCEEDINGS F. COMMUNICATIONS, RADAR & SIGNAL PROCESSING, INSTITUTION OF ELECTRICAL ENGINEERS. STEVENAGE, GB, vol. 138, no. 6 PART F, 1 décembre 1991 (1991-12-01), pages 539-544, XP000271798 ISSN: 0956-375X

**Description**

L'invention concerne un procédé pour estimer la réponse impulsionnelle d'un canal de propagation, notamment ses paramètres tels que les valeurs de retard, les directions d'arrivée, ainsi que les valeurs des amplitudes complexes associées à ces paramètres, avec une connaissance a priori du signal.

Elle s'applique, par exemple, pour estimer les paramètres d'un filtre à réponse impulsionnelle finie, pouvant mais non nécessairement, s'écrire de façon spéculaire, c'est-à-dire que le filtre peut s'écrire sous la forme de Dirac pondérés.

L'invention est utilisée pour estimer des canaux de propagation dans le domaine des radiocommunications, mais aussi de manière générale, elle s'applique à tout signal filtré par un filtre linéaire à réponse impulsionnelle finie.

Dans un système de transmission, notamment par ondes radio, un émetteur émet un signal dans un canal de transmission à destination d'un récepteur. Le signal émis subit des fluctuations d'amplitude et de phase dans le canal de transmission. Le signal reçu par le récepteur est constitué de copies du signal émis temporellement décalées et modifiées. Les fluctuations du signal et les décalages génèrent ce que l'Homme du métier appelle l'interférence intersymbole. L'interférence provient notamment de la loi de modulation employée pour la transmission et également de la propagation de multi-trajets dans le canal.

Le signal reçu est généralement issu d'un grand nombre de réflexions dans le canal, les différents trajets empruntés par le signal émis conduisant ainsi à des retards variés au niveau du récepteur. La réponse impulsionnelle du canal représente l'ensemble des fluctuations auxquelles est soumis le signal émis.

L'estimation du canal de propagation dans un système de radiocommunication est intéressante à plusieurs égards, dont certains sont indiqués ci-après à titre d'exemples :

- Les démodulateurs nécessitent généralement la connaissance des canaux afin de remédier aux effets néfastes qu'ils ont induits,
- Un deuxième intérêt est la localisation urbaine ou extra-urbaine par exemple le principe de localisation d'urgence « 911 » aux Etats-Unis,
- Enfin, la connaissance des canaux de propagation peut également servir à l'utilisation d'antennes intelligentes (de type smart antennas) tant à la réception qu'à l'émission.

Différentes techniques sont connues de l'art antérieur pour estimer les canaux de propagation et leurs paramètres.

Par exemple, le document de R. Rick and L. Milsteil intitulé "Performance acquisition in mobile ds-cdma systems", IEEE Trans on Communications, Vol: 45(No: 11):pp: 1466-1476, November 1997, propose de rechercher les retards de propagation en utilisant un banc de détecteurs non-cohérents. Les résultats sont proposés pour des canaux à multi-trajets, en présence de Doppler et d'interférences inter-cellules et intra-cellulaires.

Le document de R. Rick et L. Milsteil ayant pour titre "Optimal décision stratégies for acquisition of spread spectrum signals in frequency selective fading channels" paru dans IEEE Trans. on Communications, Vol: 46(No: 5): pp: 686-694, May 1998, divulgue une règle de décision optimale en se fondant sur les sorties des corrélateurs proposés dans le document précédemment cité. Une telle technique mono-utilisateur est limitée par les interférences dans le cas de multi-utilisateurs.

Il est aussi connu d'utiliser des filtres de mise en forme rectangulaires, par exemple selon des procédés décrits dans l'un des documents suivants :

- E. Strom, S. Parkvall, S. Miller, and B. Ottersen intitulé "Propagation delay estimation in asynchronous direct-sequence code-division multiple access systems", IEEE Trans on Communications, Vol: 44:pp: 84-93, January 1996
- S. Parkvall intitulé "Near-Far Resistant DS-CDMA Systems : Parameter estimation and Data Detection", PhD thesis, Royal Institute of Technology Stockholm, Sweden, 1996.
- S. E. Bensley and B. Aazhang intitulé "Maximum likelihood estimation of a single user's delay for code division multiple acess communication systems", Conf. Information Sciences ans Systems, 1994.

Dans le cas de filtres de mise en forme de durée supérieure à un temps de chip, ces différents procédés ne conviennent plus.

Des algorithmes d'estimation conjointe des angles d'arrivée et des temps de retards différentiels, sur des signaux reçus et connus, fondés sur des techniques de sous-espaces ont été proposés par exemple dans le document de P. Gounon intitulé "Analyse spatio-temporelle haute résolution à l'aide d'une antenne active", Traitement du Signal, Vol: 11 (No: 5):pp: 351-360, 1994.

Le document de A. J Van der Veen, M. C. Vanderveen, et A. J. Paulraj, ayant pour titre "Joint angle and delay estimation using shift-invariance properties", IEEE Sig. Proc Letters, Vol.4(No.5):pp:142-145, 1997, divulgue des procédés d'estimation des paramètres physiques de la propagation à l'aide de méthodes à base de sous-espaces.

De telles méthodes souffrent toutefois d'une dégradation des performances dès que les réponses impulsionnelles des canaux de propagation sont corrélées. Cette situation se produit notamment lorsque les amplitudes complexes ne varient pas assez rapidement sur la matrice de covariance des réponses impulsionnelles estimées au sens des moindres carrés à l'aide du signal émis.

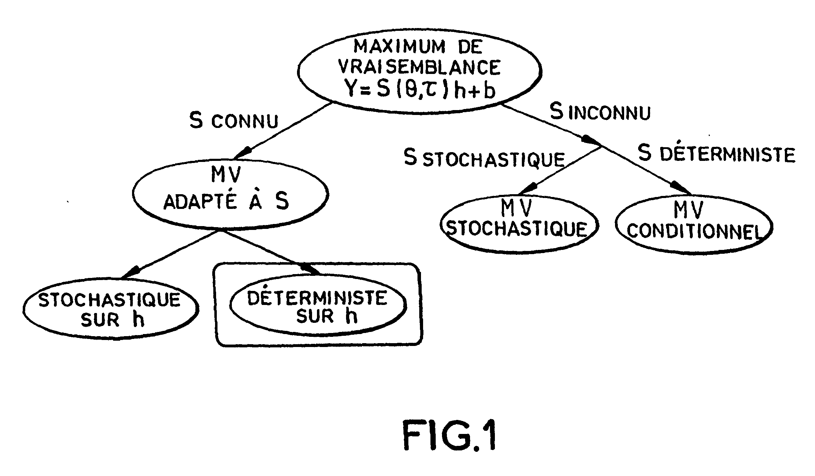

La figure 1 montre différentes techniques du Maximum de vraisemblance pouvant être utilisées en fonction des hypothèses.

Une méthode au sens du maximum de vraisemblance a par exemple été proposée dans l'une des références suivantes :

- J. Grouffaud, "Identification spatio-temporelle de canaux de propagation à trajets multiples", PhD thesis, École Normale Supérieure de Cachan, Juin 1997.
- M. Wax and A. Leshem, "Joint estimation of delays and directions of arrival of multiple reflections of a known signal.", IEEE Trans. on Signal Processing, Vol: 45(No: 10):pp: 2477-248, October 1997.

mais elle ne traite pas le contexte MIMO (abrégé anglo-saxon de Multiple Input Multiple Output).

Le document de P. Graffoulière intitulé "Méthodes actives spatio-temporelles large bande", publié dans Techniques et performances. Applications en sonar. PhD thesis, l'INPG, March 1997, divulgue également l'estimation au sens du maximum de vraisemblance mais les études de performances ne traitent que le cas d'une source unique ou de plusieurs sources très nettement séparées. Une étude similaire est divulguée dans le document de N. Bertaux ayant pour titre "Contribution à l'utilisation des méthodes du Maximum de Vraisemblance en traitement radar actif", PhD thesis, Ecole Normale Supérieure de Cachan, Janvier 2000, pour des applications de radars actifs dans le cas monosource.

Le document de Madyastha R et al, intitulé "Delay and DOA estimation in CDMA communication systems via maximum Likelihood techniques" proceedings of the 1997 IEEE International Symposium on information theory ISIT'97 ULM, June 29-July 4, 1997 IEEE International Symposium on Information theory, New York, NY, IEEE, US, 29 juin 1997 (1997-06-29) page 350 XP000950940 ISBN , 0-7803-3957-6 décrit un procédé d'estimation en sortie d'un filtre adapté pour le code. Chaque utilisateur est indépendant et en final, la solution retenue, consiste à utiliser la non corrélation des signaux d'arrivée et à estimer les délais et les directions d'arrivée pour les utilisateurs, séparément.

La présente invention concerne un procédé qui permet, notamment, d'estimer les paramètres d'un canal de propagation, en travaillant sur les signaux corrélés, en sélectionnant un certain nombre d'échantillons et en recherchant les valeurs des paramètres retard et/ou directions d'arrivées, par exemple, qui permettent de reconstruire au mieux le signal reçu.

Elle concerne également un procédé intégrant des techniques de compression d'impulsion comme prétraitement.

L'invention concerne un procédé pour estimer un ou plusieurs paramètres d'un canal de propagation avec une connaissance a priori du signal dans un système comportant un ou plusieurs capteurs caractérisé en ce qu'il comporte au moins les étapes suivantes :

- corréler le ou les signaux x(t) reçus provenant des utilisateurs avec un signal connu c(t) égal à 1,
- échantillonner le signal résultant de l'étape de corrélation à une période d'échantillonnage Te et sélectionner un nombre d'échantillons par concaténation, les signaux reçus s'exprimant sous la forme X=S($\theta$,$\tau$)h+b, les Ne échantillons étant concaténés dans le vecteur X, b est un vecteur qui contient la concaténation des échantillons de bruit, S($\theta$,$\tau$) est la matrice des vecteurs retard direction, h est le vecteur complexe des amplitudes,
- estimer les paramètres $\theta$ et $\tau$ qui s'expriment sous la forme

$$\widehat{\theta}, \widehat{\tau} \;=\; \arg\min_{\theta,\tau} \left\| \Pi_{\mathbf{S}}^{\perp}(\theta, \tau)\mathbf{X} \right\|^{2}$$

$$=\; \arg\min_{\theta,\tau} \left\{ \mathbf{X}^{\dagger}\Pi_{\mathbf{S}}^{\perp}(\theta, \tau)\mathbf{X} \right\}$$

où $\Pi_{\mathbf{S}}^{\perp}$ est le projecteur orthogonal à l'image engendrée par les vecteurs colonnes de S($\theta$, $\tau$).

Le procédé peut comporter une étape de détermination des amplitudes complexes h de la réponse impulsionnelle du canal de propagation à partir des estimées des paramètres $\theta$ et $\tau$.

L'invention concerne aussi un procédé pour estimer un ou plusieurs paramètres d'un canal de propagation avec une connaissance a priori du signal dans un système comportant un ou plusieurs capteurs et plusieurs utilisateurs, les caractéristiques des capteurs n'étant pas connues, caractérisé en ce qu'il comporte au moins les étapes suivantes :

- corréler le ou les signaux x(t) reçus provenant des utilisateurs avec un signal connu c(t) égal à 1,
- échantillonner le signal résultant de l'étape de corrélation à une période d'échantillonnage Te et sélectionner un nombre d'échantillons par concaténation,
- exprimer les signaux reçus sous une forme concaténée $\mathbf{Y} = \Psi(\tau)\alpha + N$ où $\Psi(\tau)$ est égal au produit convolué de la matrice unité $I_N$ avec la matrice

$$\boldsymbol{\mathcal{S}(\tau)} = \left[ \mathbf{s^1}(\tau_1^1), \cdots, \mathbf{s^1}(\tau_{P_1}^1), \cdots, \mathbf{s}(\tau_{PU}^U) \right]$$

et $\alpha$ contient les réponses capteurs aux différents trajets des utilisateurs,
- estimer le vecteur retard $\tau$ à partir de

$$\begin{aligned} \widehat{\tau} &= \arg\min_{\tau} \left\| \Pi_{\Psi}^{\perp}(\tau)\mathbf{Y} \right\|^2 \\ &= \arg\min_{\tau} tr\left( \mathbf{Y}^{\dagger}\Pi_{\Psi}^{\perp}(\tau)\mathbf{Y} \right) \end{aligned}$$

où $\Pi_{\Psi}^{\perp}$ est le projecteur orthogonal à l'image engendrée par les vecteurs de lignes de $\Psi(\tau)$.

L'invention concerne aussi un procédé pour estimer un ou plusieurs paramètres d'un canal de propagation avec une connaissance a priori du signal dans un système comportant un ou plusieurs capteurs et plusieurs utilisateurs, les caractéristiques des capteurs sont connues, caractérisé en ce qu'il comporte au moins les étapes suivantes :

- corréler le ou les signaux x(t) reçus provenant des utilisateurs avec un signal connu c(t) différent de 1,
- échantillonner le signal résultant de l'étape de corrélation à une période d'échantillonnage Te et sélectionner un nombre d'échantillons par concaténation,
- les signaux reçus s'exprimant sous la forme X = Φ(θ,τ)h+b les Ne échantillons étant concaténés dans le vecteur X, b est un vecteur qui contient la concaténation des échantillons de bruit, Φ(θ,τ) est la matrice des vecteurs retard-direction, et h le vecteur complexe des amplitudes,
- estimer les paramètres θ et τ à partir de

$$\boldsymbol{\theta}, \boldsymbol{\tau} = \arg\min_{\boldsymbol{\theta}, \boldsymbol{\tau}} \mathbf{X}^{\omega} \mathbf{R_b^{-1}} \Pi_{\Phi}^{\perp}(\boldsymbol{\theta}, \boldsymbol{\tau}) \mathbf{X}^{\omega}$$

$$\Pi_{\Phi}^{\perp} = \mathbf{I} - \Phi(\boldsymbol{\theta}, \boldsymbol{\tau}) \left( \Phi^{\dagger}(\boldsymbol{\theta}, \boldsymbol{\tau}) \mathbf{R_b^{-1}} \Phi(\boldsymbol{\theta}, \boldsymbol{\tau}) \right)^{-1} \Phi^{\dagger}(\boldsymbol{\theta}, \boldsymbol{\tau}) \mathbf{R_b^{-1}}$$

où ω est l'indice d'un utilisateur, $\mathbf{R_b^{-1}}$ est l'inverse de la matrice de corrélation du bruit, Φ (θ, τ) est la matrice des vecteurs retard-observations, I est la matrice identité.

Selon une autre variante l'invention concerne un procédé pour estimer un ou plusieurs paramètres d'un canal de propagation avec une connaissance a priori du signal dans un système comportant un ou plusieurs capteurs et plusieurs utilisateurs, les caractéristiques des capteurs sont connues, caractérisé en ce qu'il comporte au moins les étapes suivantes :

- corréler le ou les signaux x(t) reçus provenant des utilisateurs avec un signal connu c(t) différent de 1,
- échantillonner le signal résultant de l'étape de corrélation à une période d'échantillonnage Te et sélectionner un nombre d'échantillons par concaténation,
- les signaux reçus s'exprimant sous la forme X = Φ(θ,τ)h + b les Ne échantillons étant concaténés dans le vecteur X, b est un vecteur qui contient la concaténation des échantillons de bruit, S (θ, τ) est la matrice des vecteurs retard-direction, h le vecteur complexe des amplitudes,
- estimer le vecteur retard à l'aide de l'expression

$$\widehat{\tau} = \arg\min_{\tau} \mathbf{Y}^{\omega}\mathbf{R}_{\mathbf{n}}^{-1}\mathbf{\Pi}_{\mathbf{S}}^{\perp}(\tau)\mathbf{Y}^{\omega}$$

$$\mathbf{\Pi}_{\mathbf{S}}^{\perp} = \mathbf{I} - \mathbf{S}(\tau)\left(\mathbf{S}(\tau)\mathbf{R}_{\mathbf{n}}^{-1}\mathbf{S}(\tau)\right)^{-1}\mathbf{S}(\tau)\mathbf{R}_{\mathbf{n}}^{-1}$$

est l'indice utilisateur, Y le vecteur observation, $\mathbf{R}_{\mathbf{n}}^{-1}$ l'inverse de la matrice de corrélation du bruit, I la matrice identité.

Le procédé est par exemple appliqué dans des applications de type MIMO (Multiple Input Multiple output) ou SIMO.

L'invention concerne aussi un dispositif pour estimer un ou plusieurs paramètres d'un canal de propagation avec une connaissance a priori du signal dans un système comportant un ou plusieurs capteurs et plusieurs utilisateurs caractérisé en ce qu'il comporte au moins :

- un dispositif adapté à corréler le ou les signaux x(t) reçus provenant des utilisateurs avec un signal connu c(t) égal à 1,
- un dispositif adapté à échantillonner le signal résultant de l'étape de corrélation à une période d'échantillonnage Te et à sélectionner un nombre d'échantillons par concaténation, les signaux reçus s'exprimant sous la forme X = S (θ, τ) h + b, les Ne échantillons étant concaténés dans le vecteur X, b est un vecteur qui contient la concaténation des échantillons de bruit, S (θ, τ) est la matrice des vecteurs retard-direction, h le vecteur complexe des amplitudes,
- un dispositif adapté à déterminer les estimées des paramètres θ et τ qui s'expriment sous la forme

$$\widehat{\theta}, \widehat{\tau} = \arg\min_{\theta,\tau}\left\|\mathbf{\Pi}_{\mathbf{S}}^{\perp}(\theta,\tau)\mathbf{X}\right\|^{2}$$
$$= \arg\min_{\theta,\tau}\left\{\mathbf{X}^{\dagger}\mathbf{\Pi}_{\mathbf{S}}^{\perp}(\theta,\tau)\mathbf{X}\right\}$$

L'invention concerne aussi un dispositif pour estimer un ou plusieurs paramètres d'un canal de propagation avec une connaissance a priori du signal dans un système comportant un ou plusieurs capteurs et plusieurs utilisateurs, les caractéristiques des capteurs n'étant pas connues caractérisé en ce qu'il comporte au moins les étapes suivantes :

- un dispositif adapté à corréler le ou les signaux x(t) reçus provenant des utilisateurs avec un signal connu c(t) égal à 1,
- un dispositif adapté à échantillonner le signal résultant de l'étape de corrélation à une période d'échantillonnage Te et à sélectionner un nombre d'échantillons par concaténation,
- exprimer les signaux reçus sous une forme concaténée,

$$\mathbf{Y} = \mathbf{\Psi}(\tau)\boldsymbol{\alpha} + \mathbf{N}$$

où $\Psi(\tau)$ est égal au produit convolué de la matrice unité $I_N$ avec la matrice

$$\boldsymbol{S}(\tau) = \left[\mathbf{s}^{1}(\tau_{1}^{1}), \cdots, \mathbf{s}^{1}(\tau_{P_{1}}^{1}), \cdots, \mathbf{s}(\tau_{P^{U}}^{U})\right]$$

et α contient les réponses des trajets des différents utilisateurs,
- un dispositif adapté à estimer le vecteur retard τ à partir de :

$$\widehat{\tau} \;=\; \arg\min_{\tau} \left\| \Pi_{\Psi}^{\perp}(\tau)\mathbf{Y} \right\|^2$$
$$=\; \arg\min_{\tau} tr\left( \mathbf{Y}^{\dagger}\Pi_{\Psi}^{\perp}(\tau)\mathbf{Y} \right)$$

où $\Pi_{\Psi}^{\perp}$ est le projecteur orthogonal à l'image engendrée par les vecteurs de lignes de $\Psi(\tau)$.

L'invention concerne un dispositif pour estimer un ou plusieurs paramètres d'un canal de propagation avec une connaissance a priori du signal dans un système comportant un ou plusieurs capteurs et plusieurs utilisateurs, les caractéristiques des capteurs sont connues, caractérisé en ce qu'il comporte au moins les étapes suivantes :

- un dispositif adapté à corréler le ou les signaux x(t) reçus provenant des utilisateurs avec un signal connu c(t) différent de 1,
- un dispositif adapté à échantillonner le signal résultant de l'étape de corrélation à une période d'échantillonnage Te et sélectionner un nombre d'échantillons par concaténation,
- les signaux reçus s'exprimant sous la forme X = S ($\theta$, $\tau$) h + b, les Ne échantillons étant concaténés dans le vecteur X, b est un vecteur qui contient la concaténation des échantillons de bruit, S ($\theta$, $\tau$) est la matrice des vecteurs retard-direction et h le vecteur complexe des amplitudes,
- un dispositif adapté à estimer les paramètres $\theta$ et $\tau$ à partir de

$$\theta, \tau = \arg\min_{\theta, \tau} \mathbf{X}^{\omega}\mathbf{R}_{b}^{-1}\Pi_{\Phi}^{\perp}(\theta, \tau)\mathbf{X}^{\omega}$$

$$\Pi_{\Phi}^{\perp} = \mathbf{I} - \Phi(\theta, \tau)\left( \Phi^{\dagger}(\theta, \tau)\mathbf{R}_{b}^{-1}\Phi(\theta, \tau) \right)^{-1} \Phi^{\dagger}(\theta, \tau)\mathbf{R}_{b}^{-1}$$

où $\omega$ est l'indice d'un utilisateur, $\mathbf{R}_{b}^{-1}$ est l'inverse de la matrice de corrélation du bruit, $\Phi$ ($\theta$, $\tau$) est la matrice des vecteurs retard-observations, I est la matrice identité.

L'invention concerne aussi un dispositif pour estimer un ou plusieurs paramètres d'un canal de propagation avec une connaissance a priori du signal dans un système comportant un ou plusieurs capteurs et plusieurs utilisateurs, les caractéristiques des capteurs n'étant pas connues, caractérisé en ce qu'il comporte au moins les étapes suivantes :

- un dispositif adapté à corréler le ou les signaux x(t) reçus provenant des utilisateurs avec un signal connu c(t) différent de 1,
- un dispositif adapté à échantillonner le signal résultant de l'étape de corrélation à une période d'échantillonnage Te et à sélectionner un nombre d'échantillons par concaténation,
- les signaux reçus s'exprimant sous la forme X = S ($\theta$, $\tau$) h + b, les Ne échantillons étant concaténés dans le vecteur X, b est un vecteur qui contient la concaténation des échantillons de bruit, S ($\theta$, $\tau$) est la matrice des vecteurs retard-direction et h le vecteur complexe des amplitudes,
- un dispositif adapté à estimer le vecteur retard à l'aide de l'expression

$$\widehat{\tau} = \arg\min_{\tau} \mathbf{Y}^{\omega}\mathbf{R}_{n}^{-1}\Pi_{\mathbf{S}}^{\perp}(\tau)\mathbf{Y}^{\omega}$$

$$\Pi_{\mathbf{S}}^{\perp} = \mathbf{I} - \mathbf{S}(\tau)\left( \mathbf{S}(\tau)\mathbf{R}_{n}^{-1}\mathbf{S}(\tau) \right)^{-1}\mathbf{S}(\tau)\mathbf{R}_{n}^{-1}$$

$\omega$ est l'indice d'un utilisateur, Y le vecteur observations, $\mathbf{R}_{n}^{-1}$ la matrice de corrélation du bruit, I la matrice identité.

Récepteur de radiocommunication comportant un dispositif présentant l'une des caractéristiques précitées.

L'invention présente notamment comme avantages :

- dans le contexte MIMO coopératif, l'estimateur utilisé dans le cadre d'une antenne connue, fait appel à un modèle paramétrique des signaux reçus sur l'antenne, contrairement au maximum de vraisemblance déterministe qui estime chaque échantillon du signal sans a priori,
- en limitant le domaine d'analyse dans certains cas d'application, elle conduit à une réduction de la taille des données traitées d'où un traitement plus rapide.

D'autres caractéristiques de l'invention apparaîtront mieux à la lecture de la description qui suit où sont proposés des exemples de mise en oeuvre à titre illustratif, ceci en référence aux figures annexées où :

- La figure 1 représente différentes approches d'estimation paramétriques au sens du Maximum de vraisemblance,
- La figure 2 schématise une première variante du procédé selon l'invention pour laquelle les caractéristiques des antennes de réception sont connues,
- La figure 3 représente un schéma d'une deuxième variante de réalisation où les caractéristiques des antennes de réception ne sont pas connues,
- La figure 4 schématise une autre variante du procédé comportant une étape préalable pouvant s'appliquer aux méthodes décrites aux figures 2 et 3 précédemment.

Afin de mieux faire comprendre l'objet de l'invention, la description est donnée à titre illustratif et nullement limitatif dans le domaine des radiocommunications mobiles, dans un contexte coopératif où le récepteur dispose de certaines informations, par exemple, la connaissance, dans une certaine mesure, du signal émis (connaissance a priori du signal).

Le récepteur est par exemple constitué de N capteurs identiques et omnidirectionnels. Les signaux s(t) reçus par chacun des capteurs sont échantillonnés régulièrement à la cadence $T_e$. Cet exemple, n'empêche pas l'application du procédé selon l'invention à d'autres types de récepteurs.

Avant de détailler les différentes variantes de mise en oeuvre du procédé, quelques rappels sur la modélisation des signaux et quelques hypothèses permettant la mise en oeuvre du procédé sont énoncés.

## Modélisation des signaux reçus sur le système de réception

En présence de U utilisateurs (sources), les U signaux $s^u(t)$ avec $1 \leq u \leq U$ se propagent à travers différents canaux avant d'être reçus par un ensemble de capteurs indicés k. La réponse impulsionnelle du canal entre l'utilisateur u et le capteur k est notée $h^u_k(t,\tau)$, où t est l'instant d'arrivée du signal et $\tau$ son retard.

En appelant $h^u_k(t,\tau)$ le vecteur de dimension ($N \times 1$) dont les composantes sont les $h^u_k(t,\tau)$, avec $1 \leq k \leq K$ et K le nombre de capteurs, on peut écrire le modèle des signaux reçus sous la forme (1) :

$$\mathbf{x}(t) = \sum_{u=1}^{U} s_u(\tau) \, {}^*\mathbf{h}^u(t,\tau) + \mathbf{b}(t)$$

où
$\mathbf{b}(t)$ est le vecteur bruit de dimension ($N \times 1$).

## Hypothèse spéculaire

## Temporellement spéculaire

Le modèle spéculaire est un modèle de canaux largement utilisé pour lequel, on considère que les trajets sont vus par l'antenne comme étant des trajets temporellement ponctuels.

La fonction de transfert du canal devient donc (2):

$$\mathbf{h}^u(t,\tau) = \sum_{p=1}^{P_u} \mathbf{h}^u_p(\tau_p^u(t)) \delta(t - \tau_p^u(t))$$

avec

- $P_u$ le nombre de trajets de propagation de l'utilisateur u ,
- $\mathbf{h}^u_p(\tau_p^u(t))$ le ($N \times 1$) vecteur contenant le produit des réponses de l'antenne au trajet p par l'amplitude complexe du trajet.

Le signal reçu s'écrit dans le cas du canal spéculaire (3)

$$\mathbf{x}(t) = \sum_{u=1}^{U} \sum_{p=1}^{P^u} \mathbf{h}_p^u(\tau_p^u(t)) s^u(t - \tau_p^u(t)) + \mathbf{b}(t)$$

**Antenne calibrée**

Si l'antenne est calibrée, avec l'hypothèse que les signaux arrivant sur l'antenne ont une dispersion angulaire négligeable et que l'hypothèse bande étroite des signaux est respectée, le signal reçu est modélisé par (4) :

$$\mathbf{x}(t) = \sum_{u=1}^{U} \sum_{p=1}^{P^u} \mathbf{a}(\theta_p^u) h_p^u(\tau_p^u(t)) s^u(t - \tau_p^u(t)) + \mathbf{b}(t)$$

où

- $\theta_p^u$ est la direction d'arrivée du trajet p de l'utilisateur u,
- $h^u_p(\tau_p^u(t))$ est le gain complexe du trajet p de l'utilisateur u reçu sur le premier capteur.

L'hypothèse précédemment faite (spécularité des directions d'arrivées) n'est pas restrictive dans le cas d'une station de base en hauteur. Si la spécularité n'est pas suffisante, le modèle peut être modifié en ajoutant une largeur de lobe de direction d'arrivée qui sera estimée par la méthode proposée selon l'invention en ajoutant les paramètres de ce lobe dans les paramètres à estimer.

Les différentes variantes du procédé selon l'invention, font appel à la méthode du maximum de vraisemblance, dont différentes approches d'estimation paramètrique ont été données à la figure 1.

**Première variante de réalisation - antenne calibrée -**

Une première variante de réalisation du procédé selon l'invention utilise une méthode du maximum de vraisemblance adaptée aux signaux émis, dans le cas où les signaux émis sont en partie connue, et la réponse de l'antenne pour toutes les directions d'arrivée est connue.

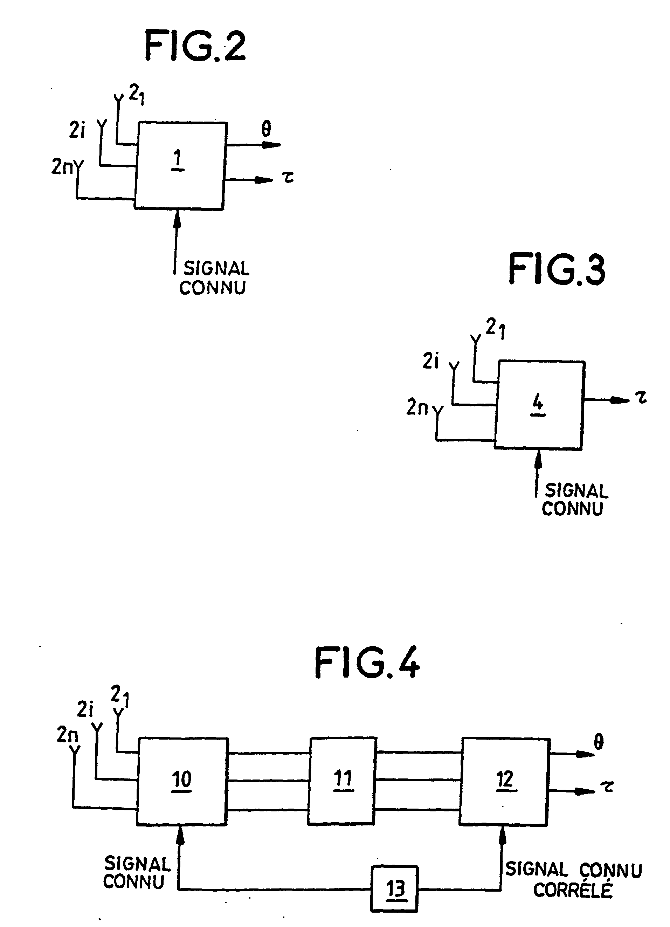

La figure 2 représente un schéma bloc où le bloc de traitement 1, comportant par exemple un microprocesseur, adapté à mettre en oeuvre le procédé selon l'invention, reçoit d'une part les différents signaux reçus par les antennes 2i, ainsi qu'un signal connu correspondant au signal émis.

En sortie du bloc de traitement le procédé selon l'invention dispose au moins des estimées des directions d'arrivée θ et des vecteurs de retard τ qui sont par exemple utilisées pour en déduire la réponse impulsionnelle du canal h(t), ceci pour une utilisation donnée ou pour l'ensemble des utilisateurs.

Les signaux reçus sur le réseau d'antennes sont des versions retardées, dilatées et éventuellement transposés en fréquence des signaux émis par les utilisateurs présents dans une cellule (ou un canal de propagation). Ces signaux s'expriment donc comme une combinaison linéaire d'un ensemble de fonctions de base connues et dont on veut extraire les paramètres.

Le procédé est présenté dans le contexte général d'estimation paramètrique des angles θ et des retards τ pour une antenne quelconque constituée de N capteurs identiques et omnidirectionnels. Les signaux sont échantillonnés régulièrement à la cadence $T_e$. On suppose le nombre de trajets connu et, si tel n'est pas le cas, on le détermine en utilisant une méthode de détection du nombre de sources qui permet d'obtenir le nombre de trajets, décrite par exemple dans l'une des références suivantes:

- "Estimation of the number of signals in the présence of unknown correlated sensor noise" de J.J.Fuchs, IEEE Trans.on signal Processing, Vol 40(N° : 5) pages 351-360, 1994;
- "Méthodes à Haute résolution pour le traitement d'antenne et l'analyse spectrale" de J.Gouffraud, P.Larzabal et H.Clergeot, chapitre 6, Sélection d'ordre de modèle, aux Editions Hermes, Février 1998;
- "A new look at the statistical model identification" de H.Akaike, IEEE Trans. On Automatic Control, Vol 19(N°6), december 1974,
- "Detection of signals by information theoric criteria" de M.Wax et T.Kailath, IEEE Trans.on ASSP, Vol 33(N°2), pages 387-392, April 1985.

Les étapes mises en oeuvre dans l'algorithme selon l'invention restent valables lorsque le nombre de sources est surestimé.

**Modélisation**

Le signal x(t) (équation (4)) reçu par le réseau de capteurs 2i est échantillonné au ryhme $T_e$, pendant une durée $t=[T_e, N_e T_e]$ avec Ne nombre d'échantillons ou nombre d'observations pendant laquelle les amplitudes complexes de la réponse impulsionnelle pour un utilisateur u et un trajet p, $h^u_p(\tau_p^u(t))$ sont considérés comme constantes.

Ces $N_e$ observations de dimension $N \times 1$ sont concaténées dans le vecteur **X** de dimension $N_e N \times 1$ : $\mathbf{X}=[\mathbf{x}(T_e)^T, \cdots, \mathbf{x}(N_e T_e)^T]^T$ (5) où l'exposant T désigne la transposée.

On définit le vecteur **B** de dimension $N_e N \times 1$ contenant la concaténation des échantillons du bruit durant la même période par (6) :

$$\mathbf{B}=[\ \mathbf{b}(T_e)^T, \cdots, \mathbf{b}(N_e T_e)^T]^T$$

Enfin nous notons $\mathbf{s}^u(\tau_p^u)$ le vecteur de dimension $N_e \times 1$ correspondant au signal émis par l'utilisateur $u$, retardé de $\tau_p^u$ et échantillonné :

$$\mathbf{s}^U(\tau_p^u)=[\ s^u(T_e-\tau_p^u), \cdots, s^u(N_e T_e- \tau_p^u)]^T \qquad (7)$$

Le vecteur des concaténations des signaux reçus peut donc s'écrire (8)

$$\mathbf{X} = \sum_{u=1}^{U} \sum_{p=1}^{P^u} h_p^u(\tau_p^u)(s^u(\tau_p^u) \otimes a(\theta_p^u)) + \mathbf{B}$$

où $\otimes$ est le produit de Kronecker.

Notons $\mathbf{S}(\theta,\tau)$ la matrice $N_e N \times P$ $\left( P=\sum_{u=1}^{U} P^U \right)$ des vecteurs retard-direction définie de la manière suivante (9) :

$$\mathbf{S}(\theta, \tau) = \left[\left[s^1(\tau_1^1) \otimes a(\theta_1^1)\right], \cdots, \left[s^u(\tau_p^u) \otimes a(\theta_p^u)\right], \cdots, \left[s^U(\tau_{P^U}^U) \otimes a(\theta_{P^U}^U)\right]\right]$$

où

- $\theta$ est le vecteur réel de taille $P$ des directions d'arrivée
- $\tau$ est le vecteur réel de taille $P$ des retards, (P étant le nombre de trajets)

On peut donc écrire l'équation des signaux reçus sur l'antenne comme : X=S(θ,τ)**h**+B (10) où **h** est le $P\times1$ vecteur complexe des amplitudes.

Cette formulation présente l'intérêt d'exprimer les observations comme un modèle linéaire fonction des amplitudes complexes **h** et du bruit.

Notons bien qu'il s'agit ici d'une modélisation MIMO (Multiple input multiple output), regroupant l'ensemble des signaux de tous les utilisateurs.

Il n'est pas nécessaire de connaître tout le signal émis par exemple en communications mobiles, des séquences de symboles connus sont émises périodiquement résultant en un signal connu. En radar ou en radio-altimétrie, par exemple, l'impulsion émise est connue.

### Log-vraisemblance

Les amplitudes complexes **h** sont considérées comme inconnues mais déterministes. Dans le but de simplifier l'exposé de l'invention sans toutefois la limiter, les signaux $s^U(f)$ formant $\mathbf{s}(\theta,\tau)$ sont considérés comme parfaitement connus aux paramètres θ,τ près. Cela conduit à un modèle d'observation (10) où seul le vecteur bruit additif est aléatoire, de densité de probabilité gaussienne, représenté par (11) :

$$P\left\{\mathbf{X}|\sigma^2,\mathbf{h},\theta,\tau\right\} = \frac{1}{\pi^{N_eN}\sigma^{2N_eN}}\exp\left(-\frac{1}{\sigma^2}\left(\mathbf{X}-\mathbf{S}(\theta,\tau)\mathbf{h}\right)^\dagger\left(\mathbf{X}-\mathbf{S}(\theta,\tau)\mathbf{h}\right)\right)$$

La log-vraisemblance des observations est dont (12) :

$$L\left(\mathbf{X}|\sigma^2,\mathbf{h},\theta,\tau\right) = -N_eN\log(\pi\sigma^2) - \frac{1}{\sigma^2}\|\mathbf{X}-\mathbf{S}(\theta,\tau)\mathbf{h}\|^2$$

### Estimateur des paramètres $\sigma^2,h,\theta,\tau$

Grâce à la séparabilité des paramètres $\sigma^2$, **h**, θ, τ, l'expression de la log-vraisemblance (12) autorise la détermination analytique du vecteur des amplitudes complexes h et de la puissance du bruit $\sigma^2$ en fonction de θ et τ. Ces estimées sont toutes deux obtenues en annulant les dérivées de la log-vraisemblance respectivement par rapport à $\sigma^2$ et par rapport à **h**. Elles ont pour expression respectivement (13) et (14):

$$\widehat{\sigma}^2 = \frac{1}{N_eN}\|\mathbf{X}-\mathbf{S}(\theta,\tau)\mathbf{h}\|^2$$

et

$$\widehat{\mathbf{h}} = \left(\mathbf{S}^\dagger(\theta,\tau)\mathbf{S}(\theta,\tau)\right)^{-1}\mathbf{S}^\dagger(\theta,\tau)\mathbf{X}$$

En substituant les valeurs de **h** et de $\sigma^2$ dans la log-vraisemblance (12), l'expression se simplifie et les estimées de θ et τ sont données par (15)

$$\widehat{\theta},\widehat{\tau} = \arg\min_{\theta,\tau}\left\|\mathbf{X}-\mathbf{S}(\theta,\tau)\left(\mathbf{S}^\dagger(\theta,\tau)\mathbf{S}(\theta,\tau)\right)^{-1}\mathbf{S}^\dagger(\theta,\tau)\mathbf{X}\right\|$$

En notant $\mathbf{\Pi}_S^\perp$ le projecteur orthogonal à l'image engendrée par les vecteurs colonnes de $\mathbf{S}(\theta,\tau)$ (16)

$$\Pi_{\mathbf{S}}^{\perp}(\theta, \tau) = \mathbf{I} - \mathbf{S}(\theta, \tau) \left( \mathbf{S}^{\dagger}(\theta, \tau) \mathbf{S}(\theta, \tau) \right)^{-1} \mathbf{S}^{\dagger}(\theta, \tau)$$

Les estimées sont les solutions de (17)

$$\begin{aligned} \widehat{\theta}, \widehat{\tau} &= \arg\min_{\theta, \tau} \left\| \Pi_{\mathbf{S}}^{\perp}(\theta, \tau) \mathbf{X} \right\|^2 \\ &= \arg\min_{\theta, \tau} \left\{ \mathbf{X}^{\dagger} \Pi_{\mathbf{S}}^{\perp}(\theta, \tau) \mathbf{X} \right\} \end{aligned}$$

Ces valeurs estimées sont ensuite utilisées respectivement dans les expressions (13) et (14) pour déterminer la puissance du bruit et la réponse impulsionnelle du canal de propagation.
Le critère introduit dans (17) est noté dans la suite du texte par

$$L(\theta, \tau) = \mathbf{X}^{\dagger} \Pi_{\mathbf{S}}^{\perp}(\theta, \tau) \mathbf{X}$$

**Mise en oeuvre du procédé selon l'invention dans le cas d'une antenne non calibrée**

La figure 3 schématise un exemple de mise en oeuvre du procédé selon l'invention dans le cas où les caractéristiques du récepteur ou de l'antenne ne sont pas connues, l'antenne est formée de plusieurs capteurs, dont la réponse n'est pas connue désignée souvent par l'expression "antennes non structurées".
Les antennes 2i reçoivent les signaux qui sont transmis à un bloc de traitement 4 adapté à mettre en oeuvre les étapes du procédé, et qui reçoit lui-même un signal connu.
Le bloc de traitement équipé par exemple d'un microprocesseur programmé en conséquence délivre au moins la valeur estimée du vecteur de retards $\tau$ et la valeur estimée de la réponse impulsionnelle du canal de propagation.

**Modélisation**

Le signal reçu s'exprime sous la forme de l'équation (4) et est échantillonné au rythme Te sur une période de temps t = [Te, NeTe] dans laquelle les amplitudes complexes de la réponse impulsionnelle du canal de propagation $h_p^u$ ($\tau_p^u(f)$) peuvent être considérées comme constantes ou sensiblement constantes. Ces Ne échantillons de dimension N$\times$1 sont concaténés dans un vecteur **Y** de dimension NeN$\times$1 tels que (18) :

$$\mathbf{Y} = \left[ \underbrace{x_1(T_e), \cdots, x_1(N_e T_e)}_{\text{capteur } 1}, \cdots, \underbrace{x_N(T_e), \cdots, x_N(N_e T_e)}_{\text{capteur } N} \right]^T$$

Où xi(nTe) est l'échantillon n du capteur i.
De même, le vecteur N de dimension NeN$\times$1 contient la concaténation des échantillons de bruit (19)

$$\mathbf{N} = \left[ \underbrace{b_1(T_e), \cdots, b_1(N_e T_e)}_{\text{capteur } 1}, \cdots, \underbrace{b_N(T_e), \cdots, b_N(N_e T_e)}_{\text{capteur } N} \right]^T$$

Où bi(nTe) est l'échantillon de bruit n du capteur d'indice i.
Le signal Y peut s'écrire (20)

$$Y = \Psi(\tau)\alpha + N$$

où la matrice $(N_e N \times NP)$ $\Psi$ est construite à partir des différents $\mathbf{s}^U(\tau_p{}^u)$ comme suit (21):

$$\Psi(\tau) = \mathbf{I}_N \otimes \mathcal{S}(\tau)$$

où $S(\tau)$ est la matrice $(N_e \times P)$ telle que (22) :

$$\mathcal{S}(\tau) = \left[ \mathbf{s}^1(\tau_1^1), \cdots, \mathbf{s}^1(\tau_{P_1}^1), \cdots, \mathbf{s}(\tau_{P^U}^U) \right]$$

$\alpha$ contient les réponses des capteurs aux différents trajets des différents utilisateurs (23) :

$$\alpha = \left[ \underbrace{h_{1,1}^1(\tau_1^1), \cdots, h_{p,1}^u(\tau_p^u), \cdots, h_{P^U,1}^U(\tau_{P^U}^U)}_{\text{capteur } 1}, \cdots, h_{P^U,N}^U(\tau_{P^U}^U) \right]^T = \left[ \mathbf{h}_1^T, \cdots, \mathbf{h}_N^T \right]^T$$

avec

$$\mathbf{h}_i = \left[ h_{1,i}^1(\tau_1^1), \cdots, h_{p,i}^u(\tau_p^u), \cdots, h_{P^U,i}^U(\tau_{P^U}^U) \right]$$

Les amplitudes complexes sont toujours supposées constantes pendant la phase d'estimation des paramètres.

La modélisation des signaux reçus donnée par l'équation (20) nous fournit un modèle affine. Comme précédemment, cette expression prend en compte les signaux de l'ensemble des utilisateurs.

**Log-vraisemblance**

Les amplitudes complexes $\alpha$ sont considérées dans ce cas comme étant inconnues mais déterministes. Les signaux qui interviennent dans $\Psi(t)$ sont supposés connus aux variables $\tau$ près. Cela conduit à un modèle où seul le bruit **N** est aléatoire, de composantes gaussiennes et de densité de probabilité (25) :

$$P\left\{ Y | \sigma^2, \alpha, \tau \right\} = \frac{1}{\pi^{N_e N} \sigma^{2N_e N}} \exp\left( -\frac{1}{\sigma^2} tr\left( (Y - \Psi(\tau)\alpha)^\dagger (Y - \Psi(\tau)\alpha) \right) \right)$$

La log-vraisemblance est alors donnée par (26)

$$L(Y | \sigma^2, \alpha, \tau) = -N_e N \log(\pi\sigma^2) - \frac{1}{\sigma^2} \| Y - \Psi(\tau\alpha) \|^2$$

**Estimateur des paramètres $\sigma^2, \alpha, \tau$**

Comme dans le cas du maximum de vraisemblance adapté aux signaux reçus avec une antenne connue tel qu'exposé précédemment, les expressions analytiques des amplitudes complexes $\alpha$, ainsi que la puissance du bruit $\sigma^2$ peuvent être exprimées en fonction du jeu de paramètres des vecteurs retards $\tau$.

Ceci s'obtient par exemple en annulant respectivement les dérivées de la log-vraisemblance par rapport à $\alpha$

et par rapport à $\sigma^2$.

On obtient l'expression (27)

$$\widehat{\sigma}^2 = \frac{1}{N_e N} \| \mathbf{Y} - \Psi(\tau)\alpha \|^2$$

Et (28)

$$\widehat{\alpha} = \left(\Psi^\dagger(\tau)\Psi(\tau)\right)^{-1} \Psi^\dagger(\tau)\mathbf{Y} = \Psi^\#(\tau)\mathbf{Y}$$

En remplaçant $\alpha$ et $\sigma^2$ par leurs estimées, la log-vraisemblance se simplifie et l'estimateur de $\tau$ est (29)

$$\widehat{\tau} = \arg\min_{\tau} \left\| \mathbf{Y} - \Psi(\tau) \left(\Psi^\dagger(\tau)\Psi(\tau)\right)^{-1} \Psi^\dagger(\tau)\mathbf{Y} \right\|^2$$

En notant $\Pi_\Psi^\perp(\tau)$ le projecteur orthogonal à l'image engendrée par les vecteurs lignes de $\Psi(\tau)$ (30):

$$\Pi_\Psi^\perp(\tau) = \mathbf{I} - \Psi(\tau) \left(\Psi^\dagger(\tau)\Psi(\tau)\right)^{-1} \Psi^\dagger(\tau)$$

l'estimée de $\tau$ est donnée par (31)

$$\begin{aligned}
\widehat{\tau} &= \arg\min_{\tau} \left\| \Pi_\Psi^\perp(\tau)\mathbf{Y} \right\|^2 \\
&= \arg\min_{\tau} tr\left(\mathbf{Y}^\dagger \Pi_\Psi^\perp(\tau)\mathbf{Y}\right)
\end{aligned}$$

Les deux variantes de réalisation qui ont été précédemment exposées traitent des signaux échantillonnés en sortie de capteur ou encore pour un signal corrélé avec un signal connu de valeur 1. Les matrices à traiter sont de taille NeN×P.

Selon une autre variante de mise en oeuvre du procédé qui peut s'appliquer aussi bien dans le cas d'une antenne calibrée que dans le cas d'une antenne non calibrée, le procédé selon l'invention utilise des signaux corrélés.

La figure 4 représente un schéma bloc dans lequel un corrélateur 10 reçoit d'une part les signaux reçus par les antennes et d'autre part le signal connu.

Le corrélateur 10 comporte un nombre de sorties identiques au nombre d'entrées, chaque signal si(t) arrivant sur une antenne étant corrélé par un signal connu c(t). Les différents signaux corrélés si(t)*ci(t) où i est l'indice du capteur, sont ensuite transmis à un dispositif 11 adapté à sélectionner un nombre d'échantillons, afin notamment de travailler sur un intervalle de temps préalablement défini. Les signaux corrélés et appartenant à l'intervalle de temps retenu, sont ensuite transmis à un bloc de traitement 12 comportant par exemple un microprocesseur adapté à estimer les valeurs $\theta$ et $\tau$, lorsque les caractéristiques de l'antenne sont connues ou la valeur de $\tau$ pour une antenne ayant des caractéristiques inconnues. A partir de ces valeurs il est possible de déterminer l'estimée de la réponse impulsionnelle du canal de propagation.

Le corrélateur 10 peut être de type analogique ou numérique, l'étape d'échantillonnage étant réalisée avant ou après l'étape de corrélation.

Le bloc de traitement reçoit aussi le signal émis connu lui-même corrélé par exemple au moyen d'un corrélateur 13.

Lorsque l'on utilise un intervalle de temps connu, il est utile de connaître l'instant de réception du bloc ainsi que la longueur du canal.

Les signaux considérés au niveau du procédé correspondent aux signaux en sortie de la corrélation par le filtre adapté au signal émis.

**Procédé pour une antenne dont les caractéristiques sont connues**

Dans cette partie on utilise les mêmes hypothèses que dans la partie précédente exposée dans le cas d'une antenne dont on connaît les paramètres. On considérera toujours les signaux comme connus et on ne s'intéressera qu'à l'utilisateur ω pour simplifier la présentation. Ce modèle se généralise immédiatement au contexte MIMO (Multiple Input Multiple Output).

**Modélisation**

En corrélant le signal reçu sur chaque capteur avec le signal de l'utilisateur ω, on obtient (32) :

$$\mathbf{y}^\omega(\tau) = \left( \sum_{u=1}^{U} \sum_{p=1}^{P^u} \mathbf{a}(\theta_p^u) h_p^u(\tau_p^u) s^u(t - \tau_p^u) + \mathbf{b}(t) \right) * s^{\omega^*}(-t)$$

$$= \sum_{p=1}^{P^u} \mathbf{a}(\theta_p^u) h_p^u(\tau_p^u) \left( s^\omega(t - \tau_p^u) * s^\omega(-t) \right) + (\mathbf{b}(t)) * s^\omega(-t)$$

En limitant les données traitées à la partie "contenant" le canal de propagation en sortie de la corrélation, on réduit grandement la complexité car on diminue la taille des matrices utilisées.

En concaténant les échantillons filtrés en sortie des capteurs sur un intervalle de temps NI, le signal X peut être modélisé de la manière suivante (33) :

$$\mathbf{X} = \mathbf{\Phi}(\theta, \tau)\mathbf{h} + \mathbf{b}$$

où

$$\mathbf{X} = \left[ \mathbf{y}^{1^T}(T_e), \cdots, \mathbf{y}^{U^T}(N_l T_e) \right]^T$$

$$\mathbf{b}^\omega = \left[ \left\{ \left( \mathbf{b}(t) + \mathbf{b}'(t) \right)^T * s^{\omega^*}(-t) \right\}_{\tau = T_e, \cdots, N_l T_e} \right]^T$$

$$\mathbf{h}^\omega = \left[ h_1^\omega, \cdots, h_{P^\omega}^\omega \right]^T$$

et

$$\mathbf{\Phi}(\theta, \tau) = \left[ \mathbf{\Phi}_1, \cdots, \mathbf{\Phi}_{P^\omega} \right]$$

avec

$$\Phi_p = \left[\Phi_p^T(T_e), \cdots, \Phi_p^T(N_l T_e)\right]^T$$

et

$$\Phi_p(t,\theta) = \left(s^\omega(t - \tau_p^u) * s^{\omega^*}(-t)\right) \otimes \mathbf{a}(\theta)$$

Le bruit $\mathbf{b}^\omega$ suit une loi normale de covariance $\sigma_T \mathbf{R_b}$ où la matrice $\mathbf{R_b} = \mathbf{R}_s{}^\omega|_N$. $\mathbf{R}_s{}^\omega$ est la matrice de covariance du vecteur (34):

$$\mathbf{s}^\omega = \left[s^\omega(T_e), \cdots, s^\omega(N_l T_e)\right]^\dagger$$

La vraisemblance du signal $X^\omega$ est donnée par (35) :

$$P(\mathbf{X}^\omega | \Phi(\theta,\tau), \mathbf{h}^\omega, \sigma_T^2, \mathbf{R_b}) = \frac{1}{\pi^{N_l N} \sigma_T^{2 N_l N} |\mathbf{R_b}|} \exp\left(-\frac{1}{\sigma_T^2}(\mathbf{X}^\omega - \Phi(\theta,\tau)\mathbf{h}^\omega)^\dagger \mathbf{R_b}^{-1}(\mathbf{X}^\omega - \Phi(\theta,\tau)\mathbf{h}^\omega)\right)$$

d'où la log-vraisemblance (36) :

$$L(\mathbf{X}^\omega | \Phi(\theta,\tau), \mathbf{h}^\omega, \sigma_T^2, \mathbf{R_b}) = -N_l N \log(\pi \sigma_T^2) - \log(|\mathbf{R_b}|) - \frac{1}{\sigma_T^2}\left\|\mathbf{R_b}^{-\frac{1}{2}}\left(\mathbf{X}^\omega - \Phi(\theta,\tau)\mathbf{h}^\omega\right)\right\|^2$$

En annulant les dérivées de la log-vraisemblance par rapport à $\sigma^2$ et par rapport à $\mathbf{h}^\omega$, on obtient les estimateurs de $\sigma^2$ et de $\mathbf{h}^\omega$ (37) :

$$\widehat{\sigma}_T^2 = \frac{\left\|\mathbf{R_b}^{-\frac{1}{2}}\left(\mathbf{X}^\omega - \Phi(\theta,\tau)\mathbf{h}^\omega\right)\right\|^2}{N_l N}$$

et

$$\widehat{\mathbf{h}}^\omega = \left(\Phi^\dagger(\theta,\tau)\Phi(\theta,\tau)\right)^{-1}\Phi^\dagger(\theta,\tau)\mathbf{X}^\omega$$

En remplaçant $\sigma^2$ et $\mathbf{h}^\omega$ par leur expression dans (36) on obtient l'estimateur recherché pour les paramètres spatio-temporels $\theta$ et $\tau$ (38); (39)

$$\theta, \tau = \arg\min_{\theta,\tau} \mathbf{X}^\omega \mathbf{R_b}^{-1} \Pi_\Phi^\perp(\theta,\tau)\mathbf{X}^\omega$$

où

$$\Pi_{\Phi}^{\perp} = I - \Phi(\theta, \tau) \left( \Phi^{\dagger}(\theta, \tau) R_b^{-1} \Phi(\theta, \tau) \right)^{-1} \Phi^{\dagger}(\theta, \tau) R_b^{-1}$$

Les paramètres spatio temporels estimés sont par exemple utilisés pour déterminer l'estimée de la réponse impulsionnelle du canal de propagation.

**Antenne non calibrée**

Dans cette partie, nous nous intéressons à une méthode du MVA réduit avec une antenne inconnue. La démarche utilisée sera identique à la précédente. Nous nous contenterons de donner le modèle du signal, la log-vraisemblance et les estimateurs.

**Modélisation**

Le signal reçu est filtré par $s^{\omega}(- t)$ (40) :

$$
\begin{aligned}
x^{\omega}(\tau) &= \left( \sum_{u=1}^{U} \sum_{p=1}^{P^u} h^u(\tau_p^u) s^u(t - \tau_p^u) + b(t) \right) * s^{\omega^{\bullet}}(-t) \\
&= \sum_{p=1}^{P^u} h^u(\tau_p^u) \left( s^{\omega}(t - \tau_p^u) * s^{\omega}(-t) \right) + \left( b(t) + b^{'}(t) \right) * s^{\omega}(-t)
\end{aligned}
$$

En concaténant les échantillons en sortie des capteurs puis les vecteurs obtenus on obtient (41) :

$$\mathbf{Y}^{\omega} = \mathbb{S}\alpha^{\omega} + \mathbf{n}^{\omega}$$

où

$$\mathbf{Y}^{\omega} = \left[ x_1^{\omega^T}(T_e), \cdots, x_1^{\omega^T}(N_l T_e), \cdots, x_N^{\omega^T}(N_l T_e) \right]^T$$

$$\mathbf{n}^{\omega} = \left[ \left\{ \left\{ \left( b_i(t) + b_i^{'}(t) \right) * s^{\omega}(-t) \right\}_{\tau = T_e, \cdots, N_l T_e} \right\}_{i=1, \cdots, N} \right]$$

$$\alpha^{\omega} = \left[ h_{1,1}^{\omega}, \cdots, h_{P^{\omega},1}^{\omega}, \cdots, h_{P^{\omega},N}^{\omega} \right]^T$$

et

$$\mathbb{S}(\tau) = \left[ \mathbb{S}_1, \cdots, \mathbb{S}_{P^{\omega}} \right]$$

avec

$$\mathbb{S}_p = [\mathbb{S}_p(T_e), \cdots \mathbb{S}_p(N_l T_e)]^T$$

et

$$\mathbb{S}_p(t) = s^\omega(t - \tau_p^u) * s^\omega(-t)$$

Le bruit $\mathbf{n}^\omega$ suit une loi normale de covariance $\sigma_T^2 R_n$ où la matrice $R_n = I_N \otimes R_{S\omega}$.
La vraisemblance du signal $\mathbf{Y}^\omega$ est donnée par (42) :

$$P(\mathbf{Y}^\omega|\mathbb{S}(\tau), \alpha^\omega, \sigma_T^2, \mathbf{R_n}) = \frac{1}{\pi^{N_l N} \sigma_T^{2N_l N} |\mathbf{R_n}|} \exp^{\left(-\frac{1}{\sigma_T^2}(\mathbf{Y}^\omega - \mathbb{S}(\tau)\alpha^\omega)^\prime \mathbf{R_n^{-1}}(\mathbf{X}^\omega - \mathbb{S}(\tau)\alpha^\omega)\right)}$$

d'où la log-vraisemblance (43) :

$$L(\mathbf{Y}^\omega|\mathbb{S}(\tau), \alpha^\omega, \sigma_T^2, \mathbf{R_n}) = -N_l N \log(\pi\sigma_T^2) - \log(|\mathbf{R_n}|) - \frac{1}{\sigma_T^2} \left\| \mathbf{R_n^{-\frac{1}{2}}} (\mathbf{Y}^\omega - \mathbb{S}(\tau)\alpha^\omega) \right\|^2$$

En annulant la dérivée de la log-vraisemblance par rapport à $\sigma_T^2$ et par rapport à $\alpha^\omega$, on obtient les estimateurs de $\sigma_T^2$ (43) et de $\alpha^\omega$ (44) :

$$\widehat{\sigma}_T^2 = \frac{\left\| \mathbf{R_n^{-\frac{1}{2}}} (\mathbf{Y}^\omega - \mathbb{S}(\tau)\alpha^\omega) \right\|^2}{N_l N}$$

et

$$\widehat{\alpha}^\omega = \left(\mathbb{S}(\tau)\mathbf{R_n^{-1}}\mathbb{S}(\tau)\right)^{-1} \mathbb{S}(\tau)\mathbf{R_n^{-1}}\mathbf{X}^\omega$$

En remplaçant dans (42) $\widehat{\sigma}_T^2$ et $\widehat{\alpha}^\omega$ par leur expression, on trouve un estimateur pour le paramètre $\tau$ (45):

$$\widehat{\tau} = \arg\min_{\tau} \mathbf{Y}^\omega \mathbf{R_n^{-1}} \mathbf{\Pi}_{\mathbb{S}}^\perp(\tau)\mathbf{Y}^\omega$$

où

$$\mathbf{\Pi}_{\mathbb{S}}^\perp = \mathbf{I} - \mathbb{S}(\tau)\left(\mathbb{S}(\tau)\mathbf{R_n^{-1}}\mathbb{S}(\tau)\right)^{-1} \mathbb{S}(\tau)\mathbf{R_n^{-1}}$$

La valeur estimée du retard $\tau$ est ensuite utilisée par exemple pour estimer la valeur de la réponse impulsionnelle du canal de propagation.

Les différentes variantes de mise en oeuvre du procédé selon l'invention, s'applique dans de nombreux domaines du traitement du signal. Dans les systèmes de communications, il est souvent nécessaire de connaître le canal de propagation afin de démoduler les signaux émis.

Compte tenu de la congestion spectrale et de la demande croissante des utilisateurs, les systèmes futurs feront communiquer plusieurs utilisateurs simultanément dans la même bande de fréquence. De ce fait, les techniques proposées ici dans le cadre MIMO ont une application directe.

De la même façon, la technique d'estimation du filtre avec réduction de la complexité s'applique dans le contexte MIMO et SIMO (Single Input Multiple Output). Dans le cas d'un traitement radar, ces techniques s'appliquent également. Elles peuvent être utilisées dans un contexte multi-cible où mono-cible avec écho.

De même dans le cadre de la radio-altimétrie, plusieurs échos du signal émis peuvent être reçus et tous nécessitent d'être estimés.

Sans sortir du cadre de l'invention, le procédé peut tenir compte de l'effet Doppler. Pour cela, une manière consiste par exemple à estimer les vitesses en minimisant une fonction multidimensionnelle intégrant tous les paramètres du modèle, autres que les amplitudes complexes et la puissance de bruit.

Le procédé selon l'invention s'applique notamment dans un système de télécommunications UMTS comportant un réseau d'antennes.

**Revendications**

1. Procédé pour estimer un ou plusieurs paramètres d'un canal de propagation avec une connaissance a priori du signal dans un système comportant un ou plusieurs capteurs le procédé étant **caractérisé en ce qu'**il comporte au moins les étapes suivantes :

   • corréler le ou les signaux x(t) reçus provenant des utilisateurs avec un signal connu c(t) égal à 1,
   • échantillonner le signal résultant de l'étape de corrélation à une période d'échantillonnage Te et sélectionner un nombre d'échantillons par concaténation, les signaux reçus s'exprimant sous la forme X=S($\theta,\tau$)h+b, les Ne échantillons étant concaténés dans le vecteur X, b est un vecteur qui contient la concaténation des échantillons de bruit, S($\theta,\tau$) est la matrice des vecteurs retard direction, h est le vecteur complexe des amplitudes,
   • estimer les paramètres $\theta$ et $\tau$ qui s'expriment sous la forme

$$\hat{\theta}, \hat{\tau} = \arg\min_{\theta,\tau} \left\| \Pi_S^{\perp}(\theta, \tau) X \right\|^2$$
$$= \arg\min_{\theta,\tau} \left\{ X^{\dagger} \Pi_S^{\perp}(\theta, \tau) X \right\}$$

   où $\Pi_S^{\perp}$ est le projecteur orthogonal à l'image engendrée par les vecteurs colonnes de S($\theta,\tau$).

2. Procédé selon la revendication 1 **caractérisé en ce qu'**il comporte une étape de détermination des amplitudes complexes h de la réponse impulsionnelle du canal de propagation à partir des estimées des paramètres $\theta$ et $\tau$.

3. Procédé pour estimer un ou plusieurs paramètres d'un canal de propagation avec une connaissance aa priori du signal dans un système comportant un ou plusieurs capteurs et plusieurs utilisateurs, les caractéristiques des capteurs n'étant pas connues, le procédé étant **caractérisé en ce qu'**il comporte au moins les étapes suivantes :

   • corréler le ou les signaux x(t) reçus provenant des utilisateurs avec un signal connu c(t) égal à 1,
   • échantillonner le signal résultant de l'étape de corrélation à une période d'échantillonnage Te et sélectionner un nombre d'échantillons par concaténation,
   • exprimer les signaux reçus sous une forme concaténée Y =$\Psi(\tau)\alpha$+N où $\Psi(\tau)$ est égal au produit convolué de la matrice unité $I_N$ avec la matrice

$$\boldsymbol{S}(\tau) = \left[ \mathbf{s}^1(\tau_1^1), \cdots, \mathbf{s}^1(\tau_{P_1}^1), \cdots, \mathbf{s}(\tau_{p_U}^U) \right]$$

et $\alpha$ contient les réponses capteurs aux différents trajets des utilisateurs,
• estimer le vecteur retard $\tau$ à partir de

$$\begin{aligned} \widehat{\tau} &= \arg\min_\tau \left\| \Pi_\Psi^\perp(\tau) Y \right\|^2 \\ &= \arg\min_\tau tr\left( Y^\dagger \Pi_\Psi^\perp(\tau) Y \right) \end{aligned}$$

où $\Pi_\Psi^\perp$ est le projecteur orthogonal à l'image engendrée par les vecteurs de lignes de $\Psi(\tau)$.

**4.** Procédé pour estimer un ou plusieurs paramètres d'un canal de propagation avec une connaissance a priori du signal dans un système comportant un ou plusieurs capteurs et plusieurs utilisateurs, les caractéristiques des capteurs sont connues, le procédé étant **caractérisé en ce qu'**il comporte au moins les étapes suivantes :

• corréler le ou les signaux x(t) reçus provenant des utilisateurs avec un signal connu c(t) différent de 1,
• échantillonner le signal résultant de l'étape de corrélation à une période d'échantillonnage Te et sélectionner un nombre d'échantillons par concaténation,
• les signaux reçus s'exprimant sous la forme X = $\Phi(\theta,\tau)$h + b les Ne échantillons étant concaténés dans le vecteur X, b est un vecteur qui contient la concaténation des échantillons de bruit, $\Phi(\theta,\tau)$ h est le vecteur complexe des amplitudes,
• estimer les paramètres $\theta$ et $\tau$ à partir de

$$\theta, \tau = \arg\min_{\theta,\tau} X^\omega R_b^{-1} \Pi_\Phi^\perp(\theta, \tau) X^\omega$$

$$\Pi_\Phi^\perp = \mathbf{I} - \Phi(\theta, \tau) \left( \Phi^\dagger(\theta, \tau) R_b^{-1} \Phi(\theta, \tau) \right)^{-1} \Phi^\dagger(\theta, \tau) R_b^{-1}$$

où $\omega$ est l'indice d'un utilisateur, $R_b^{-1}$ est l'inverse de la matrice de corrélation du bruit, $\Phi(\theta, \tau)$ est la matrice des vecteurs retard-observations, I est la matrice identité.

**5.** Procédé pour estimer un ou plusieurs paramètres d'un canal de propagation avec une connaissance a priori du signal dans un système comportant un ou plusieurs capteurs et plusieurs utilisateurs, les caractéristiques des capteurs sont connues, le procédé étant **caractérisé en ce qu'**il comporte au moins les étapes suivantes :

• corréler le ou les signaux x(t) reçus provenant des utilisateurs avec un signal connu c(t) différent de 1,
• échantillonner le signal résultant de l'étape de corrélation à une période d'échantillonnage Te et sélectionner un nombre d'échantillons par concaténation,
• les signaux reçus s'exprimant sous la forme X = $|\Phi|(\theta,\tau)$h + b les Ne échantillons étant concaténés dans le vecteur X, b est un vecteur qui contient la concaténation des échantillons de bruit, S $(\theta, \tau)$ est la matrice des vecteurs retard-direction, h le vecteur complexe des amplitudes,
• estimer le vecteur retard à l'aide de l'expression

$$\widehat{\tau} = \arg\min_\tau Y^\omega R_n^{-1} \Pi_S^\perp(\tau) Y^\omega$$

$$\Pi_S^{\perp} = I - S(\tau)\left(S(\tau)R_n^{-1}S(\tau)\right)^{-1}S(\tau)R_n^{-1}$$

$\omega$ est l'indice utilisateur, Y le vecteur observation, $R_n^{-1}$ l'inverse de la matrice de corrélation du bruit, I la matrice identité.

**6.** Procédé selon l'une des revendications 1 à 5 **caractérisé en ce qu'**il est appliqué dans des applications de type MIMO ou SIMO.

**7.** Dispositif pour estimer un ou plusieurs paramètres d'un canal de propagation avec une connaissance a priori du signal dans un système comportant un ou plusieurs capteurs et plusieurs utilisateurs le dispositif étant **caractérisé en ce qu'**il comporte au moins :

  • un dispositif adapté à corréler le ou les signaux x(t) reçus provenant des utilisateurs avec un signal connu c (t) égal à 1,
  • un dispositif adapté à échantillonner le signal résultant de l'étape de corrélation à une période d'échantillonnage Te et à sélectionner un nombre d'échantillons par concaténation, les signaux reçus s'exprimant sous la forme X = S ($\theta$, $\tau$) h + b, les Ne échantillons étant concaténés dans le vecteur X, b est un vecteur qui contient la concaténation des échantillons de bruit, S ($\theta$, $\tau$) est la matrice des vecteurs retard-direction, h le vecteur complexe des amplitudes,
  • un dispositif adapté à déterminer les estimées des paramètres $\theta$ et $\tau$ qui s'expriment sous la forme

$$\widehat{\theta},\widehat{\tau} \;=\; \arg\min_{\theta,\tau}\left\|\Pi_S^{\perp}(\theta,\tau)X\right\|^2$$
$$=\; \arg\min_{\theta,\tau}\left\{X^{\dagger}\Pi_S^{\perp}(\theta,\tau)X\right\}$$

**8.** Dispositif pour estimer un ou plusieurs paramètres d'un canal de propagation avec une connaissance a priori du signal dans un système comportant un ou plusieurs' capteurs et utilisateurs, les caractéristiques des capteurs n'étant pas connues le dispositif étant **caractérisé en ce qu'**il comporte au moins les étapes suivantes :

  • un dispositif adapté à corréler le ou les signaux x(t) reçus provenant des utilisateurs avec un signal connu c (t) égal à 1,
  • un dispositif adapté à échantillonner le signal résultant de l'étape de corrélation à une période d'échantillonnage Te et à sélectionner un nombre d'échantillons par concaténation,
  • exprimer les signaux reçus sous une forme concaténée,

$$Y = \Psi(\tau)\alpha + N$$

où $\Psi(\tau)$ est égal au produit convolué de la matrice unité $I_N$ avec la matrice

$$S(\tau) = \left[s^1(\tau_1^1),\cdots,s^1(\tau_{P_1}^1),\cdots,s(\tau_{P\omega}^{\omega})\right]$$

et $\alpha$ contient les réponses des trajets des différents utilisateurs,
  • un dispositif adapté à estimer le vecteur retard $\tau$ à partir de :

$$\hat{\tau} = \arg\min_{\tau} \left\| \Pi_{\Psi}^{\perp}(\tau)Y \right\|^2$$
$$= \arg\min_{\tau} tr\left(Y^{\dagger}\Pi_{\Psi}^{\perp}(\tau)Y\right)$$

où $\Pi_{\Psi}^{\perp}$ est le projecteur orthogonal à l'image engendrée par les vecteurs de lignes de $\Psi(\tau)$.

**9.** Dispositif pour estimer un ou plusieurs paramètres d'un canal de propagation avec une connaissance a priori du signal dans un système comportant un ou plusieurs capteurs et plusieurs utilisateurs, les caractéristiques des capteurs sont connues, le dispositif étant **caractérisé en ce qu'**il comporte au moins les étapes suivantes :

    • un dispositif adapté à corréler le ou les signaux x(t) reçus provenant des utilisateurs avec un signal connu c (t) différent de 1,
    • un dispositif adapté à échantillonner le signal résultant de l'étape de corrélation à une période d'échantillonnage Te et sélectionner un nombre d'échantillons par concaténation,
    • les signaux reçus s'exprimant sous la forme X = Φ (θ, τ) h + b, les Ne échantillons étant concaténés dans le vecteur X, b est un vecteur qui contient la concaténation des échantillons de bruit, -Φ (θ, τ) est la matrice des vecteurs retard-observations et h le vecteur complexe des amplitudes,
    • un dispositif adapté à estimer les paramètres θ et τ à partir de

$$\theta, \tau = \arg\min_{\theta,\tau} X^{\omega}R_b^{-1}\Pi_{\Phi}^{\perp}(\theta,\tau)X^{\omega}$$

$$\Pi_{\Phi}^{\perp} = I - \Phi(\theta,\tau)\left(\Phi^{\dagger}(\theta,\tau)R_b^{-1}\Phi(\theta,\tau)\right)^{-1}\Phi^{\dagger}(\theta,\tau)R_b^{-1}$$

où ω est l'indice d'un utilisateur, $R_b^{-1}$ est l'inverse de la matrice de corrélation du bruit, I est la matrice identité.

**10.** Dispositif pour estimer un ou plusieurs paramètres d'un canal de propagation avec une connaissance a priori du signal dans un système comportant un ou plusieurs capteurs et plusieurs utilisateurs, les caractéristiques des capteurs n'étant pas connues, le dispositif étant **caractérisé en ce qu'**il comporte au moins les étapes suivantes :

    • un dispositif adapté à corréler le ou les signaux x(t) reçus provenant des utilisateurs avec un signal connu c (t) différent de 1,
    • un dispositif adapté à échantillonner le signal résultant de l'étape de corrélation à une période d'échantillonnage Te et à sélectionner un nombre d'échantillons par concaténation,
    • les signaux reçus s'exprimant sous la forme X = S (θ, τ) h + b, les Ne échantillons étant concaténés dans le vecteur X, b est un vecteur qui contient la concaténation des échantillons de bruit, S (θ, τ) est la matrice des vecteurs retard-direction et h le vecteur complexe des amplitudes,
    • un dispositif adapté à estimer le vecteur retard à l'aide de l'expression

$$\hat{\tau} = \arg\min_{\tau} Y^{\omega}R_n^{-1}\Pi_S^{\perp}(\tau)Y^{\omega}$$

$$\Pi_S^{\perp} = I - S(\tau)\left(S(\tau)R_n^{-1}S(\tau)\right)^{-1}S(\tau)R_n^{-1}$$

ω est l'indice d'un utilisateur, Y le vecteur observations, $R_n^{-1}$ la matrice de corrélation du bruit, I la matrice identité.

**11.** Récepteur de radiocommunication comportant les caractéristiques du dispositif selon la revendication 7 à 10.

**Claims**

**1.** Method for estimating one or more parameters of a propagation channel with an a priori knowledge of the signal in a system comprising one or more sensors, the method being **characterized in that** it comprises at least the following steps:

   • correlating the signal or signals x(t) received originating from the users with a known signal c(t) equal to 1,
   • sampling the signal resulting from the correlation step with a sampling period Te and selecting a number of samples by concatenation, the received signals being expressed in the form X=S($\theta$,$\tau$)h+b, the Ne samples being concatenated in the vector X, b is a vector which contains the concatenation of the noise samples, S($\theta$, $\tau$) is the matrix of the direction delay vectors, h is the complex vector of the amplitudes,
   • estimating the parameters $\theta$ and $\tau$ which are expressed in the form

$$\widehat{\theta}, \widehat{\tau} = \arg\min_{\theta,\tau} \left\| \Pi_S^{\perp}(\theta, \tau)X \right\|^2$$

$$= \arg\min_{\theta,\tau} \left\{ X^{\dagger}\Pi_S^{\perp}(\theta, \tau)X \right\}$$

where $\Pi_S^{\perp}$ is the projector orthogonal to the image produced by the column vectors of S($\theta$,$\tau$).

**2.** Method according to Claim 1, **characterized in that** it comprises a step of determination of the complex amplitudes h of the impulse response of the propagation channel on the basis of the estimates of the parameters $\theta$ and $\tau$.

**3.** Method for estimating one or more parameters of a propagation channel with an a priori knowledge of the signal in a system comprising one or more sensors and several users, the characteristics of the sensors not being known, the method being **characterized in that** it comprises at least the following steps:

   • correlating the signal or signals x(t) received originating from the users with a known signal c(t) equal to 1,
   • sampling the signal resulting from the correlation step with a sampling period Te and selecting a number of samples by concatenation,
   • expressing the received signals in a concatenated form Y =$\Psi$ ($\tau$) $\alpha$+N where $\Psi$ ($\tau$) is equal to the convolved product of the unit matrix $I_N$ with the matrix

$$\mathcal{S}(\tau) = \left[ s^1(\tau_1^1), \cdots, s^1(\tau_{P_1}^1), \cdots, s(\tau_{P_U}^U) \right]$$

and $\alpha$ contains the sensor responses to the various paths of the users,
   • estimating the delay vector $\tau$ on the basis of

$$\widehat{\tau} = \arg\min_{\tau} \left\| \Pi_{\Psi}^{\perp}(\tau)Y \right\|^2$$

$$= \arg\min_{\tau} tr \left( Y^{\dagger}\Pi_{\Psi}^{\perp}(\tau)Y \right)$$

where $\Pi_{\Psi}^{\perp}$ is the projector orthogonal to the image produced by the vectors of rows of $\Psi(\tau)$.

**4.** Method for estimating one or more parameters of a propagation channel with an a priori knowledge of the signal in a system comprising one or more sensors and several users, the characteristics of the sensors are known, the method being **characterized in that** it comprises at least the following steps:

• correlating the signal or signals x(t) received originating from the users with a known signal c(t) different from 1,
• sampling the signal resulting from the correlation step with a sampling period Te and selecting a number of samples by concatenation,
• the received signals being expressed in the form X = $\Phi(\theta,\tau)$h + b, the Ne samples being concatenated in the vector X, b is a vector which contains the concatenation of the noise samples, $\Phi(\theta,\tau)$ h is the complex vector of the amplitudes,
• estimating the parameters $\theta$ and $\tau$ on the basis of

$$\theta, \tau = \arg\min_{\theta, \tau} X^{\omega} R_b^{-1} \Pi_{\Phi}^{\perp}(\theta, \tau) X^{\omega}$$

$$\Pi_{\Phi}^{\perp} = I - \Phi(\theta, \tau) \left( \Phi^{\dagger}(\theta, \tau) R_b^{-1} \Phi(\theta, \tau) \right)^{-1} \Phi^{\dagger}(\theta, \tau) R_b^{-1}$$

where $\omega$ is the index of a user, $R_b^{-1}$ is the inverse of the noise correlation matrix, $\Phi (\theta, \tau)$ is the matrix of the delay-observations vectors, I is the identity matrix.

5. Method for estimating one or more parameters of a propagation channel with an a priori knowledge of the signal in a system comprising one or more sensors and several users, the characteristics of the sensors are known, the method being **characterized in that** it comprises at least the following steps:

• correlating the signal or signals x(t) received originating from the users with a known signal c (t) different from 1,
• sampling the signal resulting from the correlation step with a sampling period Te and selecting a number of samples by concatenation,
• the received signals being expressed in the form X = $\Phi(\theta,\tau)$ h + b the Ne samples being concatenated in the vector X, b is a vector which contains the concatenation of the noise samples, S $(\theta, \tau)$ is the matrix of the delay-direction vectors, h the complex vector of the amplitudes,
• estimating the delay vector with the aid of the expression

$$\hat{\tau} = \arg\min_{\tau} Y^{\omega} R_n^{-1} \Pi_S^{\perp}(\tau) Y^{\omega}$$

$$\Pi_S^{\perp} = I - S(\tau) \left( S(\tau) R_n^{-1} S(\tau) \right)^{-1} S(\tau) R_n^{-1}$$

$\omega$ is the user index, Y the observation vector, $R_n^{-1}$ the inverse of the noise correlation matrix, I the identity matrix.

6. Method according to one of Claims 1 to 5, **characterized in that** it is applied in applications of MIMO or SIMO type.

7. Device for estimating one or more parameters of a propagation channel with an a priori knowledge of the signal in a system comprising one or more sensors and several users, the device being **characterized in that** it comprises at least:

• a device suitable for correlating the signal or signals x(t) received originating from the users with a known signal c(t) equal to 1,
• a device suitable for sampling the signal resulting from the correlation step with a sampling period Te and for selecting a number of samples by concatenation, the received signals being expressed in the form X = S $(\theta, \tau)$ h + b, the Ne samples being concatenated in the vector X, b is a vector which contains the concatenation of the noise samples, S $(\theta, \tau)$ is the matrix of the delay-direction vectors, h the complex vector of the amplitudes,
• a device suitable for determining the estimates of the parameters $\theta$ and $\tau$ which are expressed in the form

$$\hat{\theta}, \hat{\tau} = \arg\min_{\theta,\tau} \left\| \Pi_S^\perp(\theta,\tau)X \right\|^2$$
$$= \arg\min_{\theta,\tau} \left\{ X^\dagger \Pi_S^\perp(\theta,\tau)X \right\}$$

**8.** Device for estimating one or more parameters of a propagation channel with an a priori knowledge of the signal in a system comprising one or more sensors and users, the characteristics of the sensors not being known, the device being **characterized in that** it comprises at least the following steps:

- a device suitable for correlating the signal or signals x(t) received originating from the users with a known signal c(t) equal to 1,
- a device suitable for sampling the signal resulting from the correlation step with a sampling period Te and for selecting a number of samples by concatenation,
- expressing the received signals in a concatenated form,

$$Y = \Psi(\tau)\alpha + N$$

where $\Psi(\tau)$ is equal to the convolved product of the unit matrix $I_N$ with the matrix

$$S(\tau) = \left[ s^1(\tau_1^1), \cdots, s^1(\tau_{P_1}^1), \cdots, s(\tau_{P_U}^U) \right]$$

and $\alpha$ contains the responses of the paths of the various users,
- a device suitable for estimating the delay vector $\tau$ on the basis of:

$$\hat{\tau} = \arg\min_{\tau} \left\| \Pi_\Psi^\perp(\tau)Y \right\|^2$$
$$= \arg\min_{\tau} tr\left( Y^\dagger \Pi_\Psi^\perp(\tau)Y \right)$$

where $\Pi_\Psi^\perp$ is the projector orthogonal to the image produced by the vectors of rows of $\Psi(\tau)$.

**9.** Device for estimating one or more parameters of a propagation channel with an a priori knowledge of the signal in a system comprising one or more sensors and several users, the characteristics of the sensors are known, the device being **characterized in that** it comprises at least the following steps :

- a device suitable for correlating the signal or signals x(t) received originating from the users with a known signal c(t) different from 1,
- a device suitable for sampling the signal resulting from the correlation step with a sampling period Te and selecting a number of samples by concatenation,
- the received signals being expressed in the form $X = \Phi(\theta, \tau) h + b$, the Ne samples being concatenated in the vector X, b is a vector which contains the concatenation of the noise samples, $\Phi(\theta, \tau)$ is the matrix of the delay-observations vectors and h is the complex vector of the amplitudes,
- a device suitable for estimating the parameters $\theta$ and $\tau$ on the basis of

$$\theta, \tau = \arg\min_{\theta,\tau} X^\omega R_b^{-1} \Pi_\Phi^\perp(\theta,\tau)X^\omega$$

$$\Pi_{\mathbb{S}}^{\perp} = I - \Phi(\theta, \tau)\left(\Phi^{\dagger}(\theta, \tau)R_b^{-1}\Phi(\theta, \tau)\right)^{-1}\Phi^{\dagger}(\theta, \tau)R_b^{-1}$$

where $\omega$ is the index of a user, $R_b^{-1}$ is the inverse of the noise correlation matrix, $\Phi(\theta, \tau)$ is the matrix of the delay-observations vectors, I is the identity matrix.

10. Device for estimating one or more parameters of a propagation channel with an a priori knowledge of the signal in a system comprising one or more sensors and several users, the characteristics of the sensors not being known, the device being **characterized in that** it comprises at least the following steps:

• a device suitable for correlating the signal or signals x(t) received originating from the users with a known signal c(t) different from 1,
• a device suitable for sampling the signal resulting from the correlation step with a sampling period Te and for selecting a number of samples by concatenation,
• the received signals being expressed in the form X = S $(\theta, \tau)$ h + b, the Ne samples being concatenated in the vector X, b is a vector which contains the concatenation of the noise samples, S $(\theta, \tau)$ is the matrix of the delay-direction vectors and h the complex vector of the amplitudes,
• a device suitable for estimating the delay vector with the aid of the expression

$$\widehat{\tau} = \arg\min_{\tau} Y^{\omega}R_n^{-1}\Pi_{\mathbb{S}}^{\perp}(\tau)Y^{\omega}$$

$$\Pi_{\mathbb{S}}^{\perp} = I - \mathbb{S}(\tau)\left(\mathbb{S}(\tau)R_n^{-1}\mathbb{S}(\tau)\right)^{-1}\mathbb{S}(\tau)R_n^{-1}$$

$\omega$ is the index of a user, Y the observations vector, $R_n^{-1}$ the noise correlation matrix, I the identity matrix.

11. Radiocommunication receiver comprising the characteristics of the device according to Claims 7 to 10.

**Patentansprüche**

1. Verfahren zum Schätzen eines oder mehrerer Parameter eines Ausbreitungskanals mit einer a-priori-Kenntnis des Signals in einem System mit einem oder mehreren Sensoren, **gekennzeichnet durch** mindestens die folgenden Schritte:

• Korrelieren des empfangenen Signals oder der empfangenen Signale x(t), die von den Benutzern kommen, mit einem bekannten Signal c(t) gleich 1,
• Abtasten des aus der Korrelationsstufe resultierenden Signals in einer Abtastperiode Te und Auswählen einer Anzahl von Abtastwerten durch Verkettung, wobei die empfangenen Signale in der Form X=S($\theta,\tau$)h+b ausgedrückt sind, wobei die Ne Abtastwerte mit dem Vektor X verkettet sind, b ein Vektor ist, der die Verkettung der Rauschabtastwerte enthält, S($\theta,\tau$) die Matrix der Richtungsverzögerungsvektoren ist, h der komplexe Amplitudenvektor ist,
• Schätzen der Parameter $\theta$ und $\tau$, die in der folgenden Form ausgedrückt sind

$$\widehat{\theta}, \widehat{\tau} = \arg\min_{\theta,\tau}\left\|\Pi_{\mathbb{S}}^{\perp}(\theta, \tau)X\right\|^2$$
$$= \arg\min_{\theta,\tau}\left\{X^{\dagger}\Pi_{\mathbb{S}}^{\perp}(\theta, \tau)X\right\}$$

wobei $\Pi_{S}^{\perp}$ die orthogonale Projektion auf das **durch** die Spaltenvektoren von S(θ,τ) erzeugte Bild ist.

**2.** Verfahren nach Anspruch 1, **dadurch gekennzeichnet, daß** es eine Stufe der Bestimmung der komplexen Amplituden h der Impulsantwort des Ausbreitungskanals aus den Schätzungen der Parameter θ und τ umfaßt.

**3.** Verfahren zum Schätzen eines oder mehrerer Parameter eines Ausbreitungskanals mit einer a-priori-Kenntnis des Signals in einem System mit einem oder mehreren Sensoren und mehreren Benutzern, wobei die Eigenschaften der Sensoren nicht bekannt sind, **gekennzeichnet durch** mindestens die folgenden Schritte:

• Korrelieren des empfangenen Signals oder der empfangenen Signale x(t), die von den Benutzern kommen, mit einem bekannten Signal c(t) gleich 1,
• Abtasten des aus der Korrelationsstufe resultierenden Signals in einer Abtastperiode Te und auswählen einer Anzahl von Abtastwerten durch Verkettung,
• Ausdrücken der empfangenen Signale in einer verketteten Form Y=Ψ(τ)α+N wo Ψ(τ) gleich einem Faltungsprodukt der Einheitsmatrix $I_N$ mit der Matrix

$$\boldsymbol{S}(\tau) = \left[ s^1(\tau_1^1), \cdots, s^1(\tau_{R_1}^1), \cdots, s(\tau_{P^W}^W) \right]$$

ist und α die Sensorenreaktionen auf unterschiedlichen Benutzerstrecken enthält,
• Schätzen des Verzögerungsvektors τ aus

$$\hat{\tau} = \arg\min_{\tau} \left\| \Pi_{\Psi}^{\perp}(\tau)Y \right\|^2$$
$$= \arg\min_{\tau} tr\left( Y^{\dagger} \Pi_{\Psi}^{\perp}(\tau)Y \right)$$

wobei $\Pi_{\Psi}^{\perp}$ die orthogonale Projektion auf das durch die Zeilenvektoren von Ψ(τ) erzeugte Bild ist.

**4.** Verfahren zum Schätzen eines oder mehrerer Parameter eines Ausbreitungskanals mit einer a-priori-Kenntnis des Signals in einem System mit einem oder mehreren Sensoren und mehreren Benutzern, wobei die Eigenschaften der Sensoren bekannt sind, **gekennzeichnet durch** mindestens die folgenden Schritte:

• Korrelieren des empfangenen Signals oder der empfangenen Signale x(t), von den Benutzern mit einem sich von 1 unterscheidenden bekannten Signal c(t),
• Abtasten des aus dem Schritt des Korrelierens resultierenden Signals in einer Abtastperiode Te und Auswählen einer Anzahl von Abtastwerten durch Verkettung,
• wobei die empfangenen Signale in der Form X = Φ(θ,τ)h + b, erscheinen, wobei die Ne Abtastwerte im Vektor X verkettet sind, b ein Vektor ist, der die Verkettung der Rauschabtastwerte enthält, $\Phi(\theta,\tau)_h$ der komplexe Amplitudenvektor ist,
• Schätzen der Parameter θ und τ aus
•

$$\theta, \tau = \arg\min_{\theta,\tau} X^{\omega} R_b^{-1} \Pi_{\Phi}^{\perp}(\theta,\tau) X^{\omega}$$

$$\Pi_{\Phi}^{\perp} = I - \Phi(\theta,\tau) \left( \Phi^{\dagger}(\theta,\tau) R_b^{-1} \Phi(\theta,\tau) \right)^{-1} \Phi^{\dagger}(\theta,\tau) R_b^{-1}$$

wobei ω der Index eines Benutzers ist, $R_b^{-1}$ die Inverse der Rauschkorrelationsmatrix ist, Φ(θ, τ) die Matrix der Beobachtungsverzögerungsvektoren ist, I die Identitätsmatrix ist.

5. Verfahren zum Schätzen eines oder mehrerer Parameter eines Ausbreitungskanals mit einer a-priori-Kenntnis des Signals in einem System mit einem oder mehreren Sensoren und mehreren Benutzern, wobei die Eigenschaften der Sensoren bekannt sind, **gekennzeichnet durch** mindestens die folgenden Schritte:

  • Korrelieren des empfangenen Signals oder der empfangenen Signale x(t), von den Benutzern mit einem sich von 1 unterscheidenden bekannten Signal c(t),
  • Abtasten des aus dem Schritt des Korrelierens resultierenden Signals in einer Abtastperiode Te und Auswählen einer Anzahl von Abtastwerten durch Verkettung,
  • wobei die empfangenen Signale in der Form X = $\Phi(\theta,\tau)$h + b erscheinen, wobei die Ne Abtastwerte im Vektor X verkettet sind, b ein Vektor ist, der die Verkettung der Rauschabtastwerte enthält, S $(\theta, \tau)$ die Matrix der Richtungsverzögerungsvektoren ist, h der komplexe Amplitudenvektor ist,
  • Schätzen des Verzögerungsvektors mit Hilfe des Ausdrucks

$$\widehat{\tau} = \arg \min_{\tau} \mathbf{Y}^{\omega} \mathbf{R}_{\mathbf{n}}^{-1} \Pi_{\mathbb{S}}^{\perp}(\tau) \mathbf{Y}^{\omega}$$

$$\Pi_{\mathbb{S}}^{\perp} = \mathbf{I} - \mathbb{S}(\tau) \left( \mathbb{S}(\tau) \mathbf{R}_{\mathbf{n}}^{-1} \mathbb{S}(\tau) \right)^{-1} \mathbb{S}(\tau) \mathbf{R}_{\mathbf{n}}^{-1}$$

wobei $\omega$ der Benutzerindex ist, Y der Beobachtungsvektor ist, $\mathbf{R}_{\mathbf{n}}^{-1}$ die Inverse der Rauschkorrelationsmatrix ist, I die Identitätsmatrix ist.

6. Verfahren nach einem der Ansprüche 1 bis 5, **dadurch gekennzeichnet, daß** es in Anwendungen des MIMO-Typs oder SIMO-Typs angewandt wird.

7. Vorrichtung zum Schätzen eines oder mehrerer Parameter des Ausbreitungskanals mit einer a-priori-Kenntnis des Signals in einem System mit einem oder mehreren Sensoren und mehreren Benutzern, **gekennzeichnet durch** mindestens folgendes:

  • eine Vorrichtung zum Korrelieren des empfangenen Signals oder der empfangenen Signale x(t) von den Benutzern mit einem bekannten Signal c(t) gleich 1,
  • eine Vorrichtung zum Abtasten des aus dem Schritt des Korrelierens resultierenden Signals in einer Abtastperiode Te und Auswählen einer Anzahl von Abtastwerten **durch** Verkettung,
  wobei die empfangenen Signale in der Form X = S $(\theta, \tau)$h+b erscheinen, wobei die Ne Abtastwerte im Vektor X verkettet sind, b ein Vektor ist, der die Verkettung der Rauschabtastwerte enthält, S $(\theta, \tau)$ die Matrix der Richtungsverzögerungsvektoren ist, h der komplexe Amplitudenvektor ist,
  • eine Vorrichtung zum Bestimmen der Schätzungen der Parameter $\theta$ und $\tau$, die in der folgenden Form erscheinen:

$$\begin{aligned} \widehat{\theta}, \widehat{\tau} \;=\; & \arg \min_{\theta, \tau} \left\| \Pi_{\mathbb{S}}^{\perp}(\theta, \tau) \mathbf{X} \right\|^{2} \\ =\; & \arg \min_{\theta, \tau} \left\{ \mathbf{X}^{\dagger} \Pi_{\mathbb{S}}^{\perp}(\theta, \tau) \mathbf{X} \right\} \end{aligned}$$

8. Vorrichtung zum Schätzen eines oder mehrerer Parameter eines Ausbreitungskanals mit einer a-priori-Kenntnis des Signals in einem System mit einem oder mehreren Sensoren und Benutzern, wobei die Eigenschaften der Sensoren nicht bekannt sind, **dadurch gekennzeichnet, daß** sie mindestens folgende Stufen umfaßt:

  • eine Vorrichtung zum Korrelieren des empfangenen Signals oder der empfangenen Signale x(t) von den Benutzern mit einem bekannten Signal c(t) gleich 1,

• eine Vorrichtung zum Abtasten des aus dem Schritt des Korrelierens resultierenden Signals in einer Abtastperiode Te und Auswählen einer Anzahl von Abtastwerten durch Verkettung,
• Ausdrücken der empfangenen Signale in einer verketteten Form,

$$Y = \Psi(\tau)\alpha + N$$

wobei $\Psi(\tau)$ gleich dem Faltungsprodukt der Einheitsmatrix $I_N$ mit der Matrix

$$S(\tau) = \left[ s^1(\tau_1^1), \cdots, s^1(\tau_{P_1}^1), \cdots, s(\tau_{PU}^U) \right]$$

ist und $\alpha$ die Reaktionen der Strecken der verschiedenen Benutzer enthält,
• eine Vorrichtung zum Schätzen des Verzögerungsvektors $\theta$ aus folgendem:

$$\begin{aligned} \hat{\tau} &= \arg\min_{\tau} \left\| \Pi_{\Psi}^{\perp}(\tau)Y \right\|^2 \\ &= \arg\min_{\tau} tr\left( Y^{\dagger}\Pi_{\Psi}^{\perp}(\tau)Y \right) \end{aligned}$$

wobei $\Pi_{\Psi}^{\perp}$ die orthogonale Projektion auf das durch die Zeilenvektoren von $\Psi(\tau)$ erzeugte Bild ist.

9.  Vorrichtung zum Schätzen eines oder mehrerer Parameter eines Ausbreitungskanals mit einer a-priori-Kenntnis des Signals in einem System mit einem oder mehreren Sensoren und mehreren Benutzern, wobei die Eigenschaften der Sensoren bekannt sind, **dadurch gekennzeichnet, daß** sie mindestens folgende Stufen umfaßt:

    • eine Vorrichtung zum Korrelieren des empfangenen Signals oder der empfangenen Signale x(t) von den Benutzern mit einem bekannten Signal c(t) ungleich 1,
    • eine Vorrichtung zum Abtasten des aus dem Schritt des Korrelierens resultierenden Signals in einer Abtastperiode Te und Auswählen einer Anzahl von Abtastwerten durch Verkettung,
    • wobei die empfangenen Signale in der Form X = $\Phi$ ($\theta$, $\tau$)h+b erscheinen, wobei die Ne Abtastwerte im Vektor X verkettet sind, b ein Vektor ist, der die Verkettung der Rauschabtastwerte enthält, $\Phi$ ($\theta$, $\tau$) die Matrix der Beobachtungsverzögerungsvektoren ist und h der komplexe Amplitudenvektor ist,
    • eine Vorrichtung zum Schätzen der Parameter $\theta$ und $\tau$ aus folgendem:

$$\theta, \tau = \arg\min_{\theta, \tau} X^{\omega} R_b^{-1} \Pi_{\Phi}^{\perp}(\theta, \tau) X^{\omega}$$

$$\Pi_{\Phi}^{\perp} = I - \Phi(\theta, \tau)\left( \Phi^{\dagger}(\theta, \tau)R_b^{-1}\Phi(\theta, \tau) \right)^{-1} \Phi^{\dagger}(\theta, \tau)R_b^{-1}$$

    wobei $\omega$ der Index eines Benutzers ist, $R_b^{-1}$ die Inverse der Rauschkorrelationsmatrix ist, $\Phi$ ($\theta$, $\tau$) die Matrix der Beobachtungsverzögerungsvektoren ist, I die Identitätsmatrix ist.

10. Vorrichtung zum Schätzen eines oder mehrerer Parameter eines Ausbreitungskanals mit einer a-priori-Kenntnis des Signals in einem System mit einem oder mehreren Sensoren und mehreren Benutzern, wobei die Eigenschaften der Sensoren nicht bekannt sind, **dadurch gekennzeichnet, daß** sie mindestens die folgenden Stufen umfaßt:

    • eine Vorrichtung zum Korrelieren des empfangenen Signals oder der empfangenen Signale x(t) von den Benutzern mit einem sich von 1 unterscheidenden bekannten Signal c(t),

• eine Vorrichtung zum Verketten des aus dem Schritt des Korrelierens resultierenden Signals in einer Abtastperiode Te und Auswählen einer Anzahl von Abtastwerten durch Verkettung,
• wobei die empfangenen Signale in der Form X = S (θ, τ)h+b erscheinen, wobei die Ne Abtastwerte im Vektor X verkettet sind, b ein Vektor ist, der die Verkettung der Rauschabtastwerte enthält, S (θ, τ) die Matrix der Richtungsverzögerungsvektoren und h der komplexe Amplitudenvektor ist,
• eine Vorrichtung zum Schätzen des Verzögerungsvektors mit Hilfe des Ausdrucks

$$\hat{\tau} = \arg\min_{\tau} \mathbf{Y}^{\omega}\mathbf{R}_{\mathbf{n}}^{-1}\mathbf{\Pi}_{\mathbf{S}}^{\perp}(\tau)\mathbf{Y}^{\omega}$$

$$\mathbf{\Pi}_{\mathbf{S}}^{\perp} = \mathbf{I} - \mathbf{S}(\tau)\left(\mathbf{S}(\tau)\mathbf{R}_{\mathbf{n}}^{-1}\mathbf{S}(\tau)\right)^{-1}\mathbf{S}(\tau)\mathbf{R}_{\mathbf{n}}^{-1}$$

wobei ω der Index eines Benutzers, Y der Beobachtungsvektor, $\mathbf{R}_{\mathbf{n}}^{-1}$ die Rauschkorrelations-Beobachtungsvektor, die Rauschkorrelationsmatrix, I die Identitätsmatrix ist.

**11.** Funkkommunikationsempfänger mit den Eigenschaften der Vorrichtung nach den Ansprüchen 7 bis 10.

FIG.1

EP 1 229 696 B1

# FIG.2

# FIG.3

# FIG.4